# EUROPÄISCHE PATENTSCHRIFT

(11) **EP 4 565 388 B1**
(45) Veröffentlichungstag und Bekanntmachung des Hinweises auf die Patenterteilung: **22.04.2026**
(21) Anmeldenummer: 24745707.0
(22) Anmeldetag: 16.07.2024
(51) Int. Cl.: B23Q 1/28, B23Q 16/10, F16B 21/08, F16D 55/12

(54) **GEHÄUSETEIL FÜR EINE KLEMM- UND/ODER BREMSVORRICHTUNG**
HOUSING PART FOR A CLAMPING AND/OR BRAKING DEVICE
PARTIE BOÎTIER POUR UN DISPOSITIF DE SERRAGE ET/OU DE FREINAGE

(30) Priorität: 24.08.2023 DE 102023122783; 24.08.2023 DE 202023104835 U
(43) Veröffentlichungstag der Anmeldung: 11.06.2025
(73) Patentinhaber: HEMA Maschinen- und Apparateschutz GmbH, 63500 Seligenstadt (DE)
(72) Erfinder: LIKUS, Edmund, 63500 Seligenstadt (DE)
(74) Vertreter: Herrmann, Daniel
(86) Internationale Anmeldenummer: PCT/EP2024/070101
(87) Internationale Veröffentlichungsnummer: WO 2025/040321

(56) Entgegenhaltungen:
- WO-A1-2004/067222
- DE-B3- 102021 006 219

## Beschreibung

### TECHNISCHES GEBIET

Die Offenbarung betrifft ein Gehäuseteil für eine Klemm- und/oder Bremsvorrichtung und eine Klemm- und/oder Bremsvorrichtung mit einem solchen Gehäuseteil.

### HINTERGRUND

Bei der Herstellung von Werkzeug- oder Maschinenteilen werden Bearbeitungsmaschinen, insbesondere Arbeitsspindeln oder andere Werkzeugmaschinen, verwendet, die mittels an einer Welle befestigten Werkzeugen Material von einem Werkstück bearbeiten, insbesondere um es in die gewünschte Form zu bringen. Die Welle kann eine Rotationsachse oder Schwenkachse von einer solchen Maschine sein. Weiterhin werden mittels einer Welle rotier- oder schwenkbare Tische dazu verwendet, Werkzeuge oder Werkstücke in die geeignete Bearbeitungsposition zu stellen oder Werkstücke mit entsprechenden Drehzahlen zu bewegen. Voraussetzung für ein genaues und effizientes Bearbeiten ist dabei unter Anderem eine hohe Drehzahl der Welle. Notfall- bzw. Sicherheitssysteme haben daher die Aufgabe, die Welle bei Störung oder Ausfall der Systeme, wie beispielsweise Stromausfall oder Kabelbruch, zu stoppen bzw. in einer festen Position zu halten und damit zu fixieren.

Gängige Bearbeitungsmaschinen verfügen dabei über elektromagnetische, hydraulische oder pneumatische Klemm- und/oder Bremsvorrichtungen. Solche Vorrichtungen verfügen über einen Reibbelag, der mittels Kraftübertragung reibschlüssig mit der Welle verbunden werden kann. Dadurch wird ein unterschiedlich schnelles Fixieren der Welle ermöglicht.

Bei hydraulischen Klemmvorrichtungen wird eine Kammer mit Hydrauliköl beaufschlagt und klemmt die sich drehende Welle oder Scheibe fest. Auch passive Hydraulik-Klemmen sind bekannt. Solche hydraulischen Klemmen weisen jedoch lange Reaktionszeiten auf bzw. kurze Reaktionszeiten erfordern dort einen sehr hohen Aufwand. Ferner ist das Hydraulikmaterial, insbesondere Hydraulikventile und Hydraulikrohre, kostspielig und erfordert längere Montagezeiten. Auch ist durch das Hydrauliköl ein Mehraufwand für die Aufrechterhaltung der Sauberkeit im Umfeld einer hydraulischen Klemme zu verzeichnen.

Bei pneumatischen Klemm- und/oder Bremsvorrichtungen werden üblicherweise elastische Elemente, insbesondere federnde Platten, mit Druckluft beaufschlagt und können einige der genannten Nachteile von hydraulischen Klemmvorrichtungen überwinden.

EP 1 585 616 B1 und EP 1 651 881 B1 beschreiben pneumatische Klemmvorrichtungen mit zwei ringförmigen Federplatten, die in ein Gehäuse der Klemmvorrichtungen eingebracht werden und dort einen Druckraum bilden, der mit Druckluft beaufschlagt oder be- und entlüftet werden kann, um die Biegung der Federplatten zu ändern und dadurch zwischen einem geschlossenen Zustand der Klemmvorrichtungen, in dem ein zu klemmendes Objekt wie eine rotierbare Welle geklemmt wird, und einem offenen Zustand der Klemmvorrichtungen, in dem das Objekt frei ist, zu wechseln. In der Praxis hat sich jedoch gezeigt, dass die Gehäuseteile der Klemme zueinander und zur Umgebung hin nicht ausreichend abdichten und ausfallen bzw. nicht störungsfrei betrieben werden können.

DE 10 2021 006 219 B3 beschreibt eine Brems- und/oder Klemmvorrichtung mit einem ringförmigen, mindestens einen pneumatischen oder hydraulischen Anschluss aufweisenden, eine in axialer Richtung orientierte Stangenaufnahme umgreifenden Gehäuse, wobei das Gehäuse ein Bodenteil und ein Deckelteil hat und wobei innerhalb des Gehäuses mindestens ein ringförmiger Druckraum angeordnet ist. Der Druckraum ist mittels mindestens eines in axialer Richtung verfahrbaren Kolbens in axialer Richtung begrenzt. Er ist in radialer Richtung mittels der Außenwandungen des Gehäuses und mittels mindestens eines Innenrings begrenzt, der eine mindestens einen Innenwandabschnitt aufweisende Innenwandung des Gehäuses umgreift. Auf der dem Druckraum abgewandten, in axialer Richtung zeigenden Kolbenoberseite ist im Gehäuse ein Scheibenelement angeordnet, wobei die Kolbenoberseite an diesem Scheibenelement anliegt, anlegbar oder fixiert ist. Der Innenwandabschnitt ist auskragend in dem Deckelteil oder in dem Bodenteil des Gehäuses angeordnet.

### KURZBESCHREIBUNG

Ausgehend von dem eingangs genannten Stand der Technik liegt der Offenbarung die Aufgabe zugrunde, Mittel bereitzustellen, die eine pneumatische Klemm- und/oder Bremsvorrichtung dazu befähigen, besser abzudichten.

Die Aufgabe wird gelöst mit einem Gehäuseteil mit den Merkmalen des Patentanspruchs 1 und mit einer Klemm- und/oder Bremsvorrichtung mit den Merkmalen des Patentanspruchs 10 oder 11. Bevorzugte Ausführungsformen sind in den abhängigen Ansprüchen, in der Beschreibung und in den Figuren beschrieben.

Entsprechend der erfindungsgemäßen Lösung wird ein Gehäuseteil für eine pneumatische Klemm- und/oder Bremsvorrichtung bereitgestellt, das Gehäuseteil umfassend: einen ersten Rand des Gehäuseteils und einen dem ersten Rand gegenüberliegenden zweiten Rand des Gehäuseteils; eine zwischen dem zweiten Rand und dem ersten Rand angeordnete ringförmige Aussparung zum Einklemmen einer ringförmigen Federplatte zwischen einer durch die Aussparung definierten ersten Anlagefläche des Gehäuseteils und einer durch die Aussparung definierten zweiten Anlagefläche des Gehäuseteils; ein Klemmelement mit einer Klemmfläche, die ausgelegt ist, wenn die Federplatte derart in der Aussparung zwischen der ersten Anlagefläche und der zweiten Anlagefläche eingeklemmt ist, dass sich ein erstes Ende der Federplatte an der ersten Anlagefläche abstützt und ein zweites Ende der Federplatte auf die zweite Anlagefläche drückt, eine Klemm- und/oder Bremskraft auf ein zu klemmendes und/oder zu bremsendes Objekt zu übertragen; eine erste Gehäusekontaktfläche, die sich zwischen dem ersten Rand und der ersten Anlagefläche erstreckt; wobei auf der ersten Gehäusekontaktfläche mindestens eine Nut zur Aufnahme eines Dichtungsmittels angeordnet ist. Das Gehäuseteil weist ein, zwei oder mehr Anschlüsse zum Beaufschlagen des Gehäuseteils (insb. der ein oder mehreren Druckräume) mit einem Druckmedium (z.B. Druckluft) auf. Dabei ist die mindestens eine Nut durch ein oder mehrere der Anschlüsse unterbrochen. Auf einen Abschnitt der Nut kann eine Lücke für den Anschluss folgen und daraufhin wiederum ein anderer Abschnitt der Nut folgen, die sich nach der Unterbrechung durch den Anschluss fortsetzt. Alternativ oder zusätzlich verläuft die mindestens eine Nut auf der ersten Gehäusekontaktfläche zwischen dem ersten Rand des Gehäuseteils und ein oder mehrere (andere) Anschlüsse und umläuft diese vorzugsweise zumindest teilweise. Dies erhöht zusätzlich die Dichtheit, da die Nut bis an die Anschlüsse geführt wird, und diese ggf. sogar teilweise umläuft, so dass das in der Nut befindliche Dichtungsmittel die Anschlüsse gegenüber dem ersten Rand des Gehäuseteils und damit der Umgebung abdichtet. Dies reduziert die Störanfälligkeit durch Reduktion von Leckage im Bereich der Anschlüsse.

Bevorzugt ist der Abstand der zweiten Anlagefläche zu dem zweiten Rand oder der Klemmfläche kleiner als der Abstand der ersten Anlagefläche zu dem zweiten Rand bzw. der Klemmfläche. Der zweite Rand kann der Rand des Gehäuseteils sein, auf oder an dem die Klemmfläche vorgesehen ist oder, der im in der Klemm- und/oder Bremsvorrichtung eingebauten Zustand näher an dem zu klemmenden bzw. bremsenden Objekt ist und ggf. dieses Objekt im geschlossenen Zustand berührt.

Bevorzugt ist der Abstand der ersten Anlagefläche zu dem ersten Rand kleiner als der Abstand der zweiten Anlagefläche zu dem ersten Rand. Der erste Rand kann der Rand des Gehäuses sein, der im in der Klemm- und/oder Bremsvorrichtung eingebauten Zustand dem zu klemmenden bzw. bremsenden Objekt abgewandt ist bzw. weiter von dem Objekt entfernt ist als der zweite Rand. Entlang des ersten Rands können Löcher zum Befestigen des Gehäuseteils mit einem anderen Gehäuseteil zur Bildung der Klemm- und/oder Bremsvorrichtung angeordnet sein.

Entsprechend der erfindungsgemäßen Lösung wird ferner eine Klemm- und/oder Bremsvorrichtung zum Klemmen und/oder Bremsen eines zu klemmenden und/oder bremsenden Objekts bereitgestellt, die Vorrichtung umfassend: ein Gehäuse umfassend ein erstes erfindungsgemäßes Gehäuseteil und ein zweites erfindungsgemäßes Gehäuseteil, wobei die beiden Gehäuseteile derart zueinander angeordnet und miteinander befestigt sind, dass die erste Gehäusekontaktfläche des ersten Gehäuseteils der ersten Gehäusekontaktfläche des zweiten Gehäuseteils zugewandt ist, und dass die Aussparungen der ersten und zweiten Gehäuseteile zusammen einen Innenraum innerhalb des Gehäuses bilden; eine in dem Innenraum angeordnete Feder umfassend eine erste ringförmige Federplatte und eine zweite ringförmige Federplatte, wobei die Federplatten derart innerhalb des Innenraums angeordnet sind, dass in dem Innenraum mindestens ein Druckraum gebildet wird, der zumindest teilweise durch die Federplatten begrenzt wird, wobei der Druckraum be- oder entlüftbar ist und mit Überdruck eines dem Gehäuse zuführbaren Druckmediums beaufschlagbar ist, wobei die erste Federplatte zwischen der ersten Anlagefläche des ersten Gehäuseteils und der zweiten Anlagefläche des ersten Gehäuseteils eingeklemmt ist; wobei die zweite Federplatte zwischen der ersten Anlagefläche des zweiten Gehäuseteils und der zweiten Anlagefläche des zweiten Gehäuseteils eingeklemmt ist; und wobei die Federplatten derart relativ zu den mindestens einen Druckraum angeordnet sind, dass durch Be- oder Entlüften des Druckraums oder Beaufschlagung des Druckraum mit Überdruck, eine Biegung mindestens einer der Federplatten veränderbar ist und dadurch die Vorrichtung zwischen einem geöffneten Zustand, in dem das Objekt von den Klemmflächen beabstandet ist, und einem geschlossenen Zustand, in dem ein oder mehrere der Klemmflächen eine Klemm- und/oder Bremskraft auf das Objekt übertragen, wechselt. In jeder der Gehäuseteile kann in der jeweiligen Nut ein Dichtungsmittel aufgenommen sein. Dabei kann in jedem der Gehäuseteile ein jeweiliges eigenes Dichtungsmittel (also insgesamt mindestens zwei Dichtungsmittel pro Gehäuse der Klemm- und/oder Bremsvorrichtung) vorliegen oder ein einziges Dichtungsmittel kann beim miteinander befestigen der Gehäuseteile in die Nuten der Gehäuseteile aufgenommen werden.

Das Problem des störanfälligen Betriebs der Klemm- und/oder Bremsvorrichtungen wegen Leckage zwischen den Gehäuseteilen und gegenüber der Umgebung konnte durch Aspekte dieser Offenbarung überwunden werden. Die folgende Erkenntnisse der Erfinder liegen der Offenbarung zugrunde.

In der Vergangenheit wurden große Mengen von Dichtmasse flächig zwischen den Gehäuseteilen einer Klemme aufgetragen, um eine Abdichtung zwischen den Gehäuseteilen und gegenüber der Umgebung herzustellen. Eine flächig aufgetragene Dichtmasse ist jedoch fehleranfällig, beispielsweise weil sie nicht überall dort, wo sie benötigt bzw. nicht gleichmäßig aufgetragen werden. Die Erfinder haben herausgefunden, dass das Einfügen einer Nut auf der ersten Gehäusekontaktfläche, die dem kontaktieren des Gehäuseteils mit einem anderen Gehäuseteil dient und sich zwischen dem ersten Rand und der ersten Auflagefläche des Gehäuseteils erstreckt, zum gezielten Einbringen eines Dichtungsmittels, wie etwa einer Dichtmasse (z.B. Klebe- und Dichtwerkstoff) oder eines elastischen Materials (z.B. O-Ring), zu weniger fehleranfälligen Klemm- und/oder Bremsvorrichtungen führt, da Ort des durch die Nut aufnehmbaren Dichtungsmittels durch die Nut definiert sind, sich das Dichtungsmittel verlässlicher anbringen lässt, und so eine verlässliche Abdichtung zwischen den Gehäuseteilen und gegenüber der Umgebung erreicht wird. Insbesondere wird durch die Nut eine verbesserte Abdichtung des sich zwischen einer jeden Federplatte und des dazugehörigen Gehäuseteils befindliche Druckraums erzielt, der anfällig für Leckage ist. Insgesamt reduzierte die Nut auf der ersten Gehäusekontaktfläche die Störanfälligkeit und erhöhte die Betriebsdauer einer Klemme. Auch konnte so die Menge an nötigem Dichtungsmittel (wie etwa Dichtmasse, z.B. Klebe- und Dichtwerkstoff), die bisher für das verlässliche Abdichten benötigt wurde, reduziert werden, was Kosten reduziert und umweltschonend ist. Dabei hat das Anbringen der Nut auf die erste Gehäusekontaktfläche keine negative Auswirkung auf die Dynamik des Öffnens und Schließens der Klemm- und/oder Bremsvorrichtung.

Gemäß bevorzugter Aspekte der Offenbarung weist die Nut eine Breite von 1 mm bis 2 mm, 1,4 mm bis 1,6 mm, oder etwa 1,5 mm auf. Alternativ oder zusätzlich weist die Nut eine Tiefe von 0,5 mm bis 1,0 mm, 0,65 mm bis 0, 75 mm, oder etwa 0,7 mm auf. In einem gegebenen Abschnitt der Nut wird dadurch die bevorzugte Ausdehnung bzw. das bevorzugte Volumen des aufzunehmenden Dichtungsmittels definiert und so die Wahrscheinlichkeit reduziert, dass zu wenig oder zu viel Dichtungsmittel aufgebracht wird.

Gemäß eines bevorzugten Aspekts der Offenbarung kann der Querschnitt der Nut in Form eines V (V-förmig), eines an einer Seite offenen Rechtecks, eines U (U-förmig) oder eines Halbkreises sein. Diese Formen sind besonders bevorzugt für die Aufnahme und verlässliche Lagerung des Dichtungsmittels. Andere Formen der Nut sind möglich.

Gemäß bevorzugter Aspekte der Offenbarung umläuft die mindestens eine Nut den Mittelpunkt der ringförmigen Aussparung zumindest teilweise bzw. erstreckt sich zumindest teilweise entlang eines Kreisbogens, wobei der Kreisbogen vorzugsweise einen Mittelpunktswinkel von mindestens 45°, 90°, 120°, 135°, 160°, 180°, 225°, 270°, 315°, 350°, oder 360° überspannt. Die Nut kann in etwa kreis- oder ringförmig ausgestaltet sein. Die Nut umläuft den ersten Rand zumindest teilweise. Dadurch befördert die Nut zumindest in Abschnitten des ersten Randes eine möglichst gleichmäßige oder gar symmetrische Abdichtung, was für einen längeren Betrieb der Klemme förderlich ist.

Gemäß bevorzugter Aspekte der Offenbarung weist die erste Gehäusekontaktfläche ferner ein oder mehrere Löcher zum Befestigen des Gehäuseteils mit einem Befestigungsmittel an einem anderen Gehäuseteil auf und die mindestens eine Nut erstreckt sich auf der ersten Gehäusekontaktfläche zwischen den Löchern und der ersten Anlagefläche, wobei die Löcher auf der ersten Gehäusekontaktfläche zwischen dem ersten Rand und der mindestens einen Nut angeordnet sind. Mit anderen Worten befinden sich die Löcher vom zu klemmenden bzw. bremsenden Objekt gesehen außerhalb von der Nut, sodass die Löcher und die darin anzubringen Befestigungsmittel die Dichtheit zwischen den Gehäuseteilen und gegenüber der Umgebung nicht negativ beeinflussen können. Dies erhöht zusätzlich die Dichtheit und reduziert die Störanfälligkeit.

Durch die hier beschriebenen Mitteln einzeln und in Kombination können Klemmen bereitgestellt werden, die verlässlichen zwischen den Gehäuseteilen und gegenüber der Umgebung abdichten, ohne, dass dadurch die Dynamik des Öffnens und Schließens der Klemme negativ beeinträchtigt wird.

Sofern diese Kurzbeschreibung Merkmale beschreibt, die nicht in den Patentansprüchen aufgeführt sind, so stellen diese Merkmale keine wesentlichen Merkmale dar und müssen nicht zwangsläufig in die Patentansprüche aufgenommen werden, jedoch sind diese Merkmale besonders prominente bevorzugte Realisierungen der beanspruchten Gegenstände, können mit jedem der Patentansprüche kombiniert werden und können auch untereinander beliebig kombiniert werden.

### KURZBESCHREIBUNG DER FIGUREN

Figur 1A zeigt einen schematischen Querschnitt durch eine erfindungsgemäße nach innen gerichtete, passive pneumatische Klemm- und/oder Bremsvorrichtung im geschlossenen Zustand.
Figur 1B zeigt einen schematischen Querschnitt durch eine erfindungsgemäße nach außen gerichtete, passive pneumatische Klemm- und/oder Bremsvorrichtung im geschlossenen Zustand.
Figur 2A zeigt einen schematischen Querschnitt durch eine erfindungsgemäße nach innen gerichtete, passive pneumatische Klemm- und/oder Bremsvorrichtung im offenen Zustand.
Figur 2B zeigt einen schematischen Querschnitt durch eine erfindungsgemäße nach außen gerichtete, passive pneumatische Klemm- und/oder Bremsvorrichtung im offenen Zustand.
Figur 3A zeigt einen schematischen Querschnitt durch eine erfindungsgemäße nach innen gerichtete, aktive pneumatische Klemm- und/oder Bremsvorrichtung im offenen Zustand.
Figur 3B zeigt einen schematischen Querschnitt durch eine erfindungsgemäße nach außen gerichtete, aktive pneumatische Klemm- und/oder Bremsvorrichtung im offenen Zustand.
Figur 4A zeigt einen schematischen Querschnitt durch eine erfindungsgemäße nach innen gerichtete, aktive pneumatische Klemm- und/oder Bremsvorrichtung im geschlossenen Zustand.
Figur 4B zeigt einen schematischen Querschnitt durch eine erfindungsgemäße nach außen gerichtete, aktive pneumatische Klemm- und/oder Bremsvorrichtung im geschlossenen Zustand.
Figur 5A zeigt einen Querschnitt durch eine erfindungsgemäße pneumatische Klemm- und/oder Bremsvorrichtung in dreidimensionaler Darstellung.
Figuren 5B bis 5D zeigen eine Variante eines aus Figur 5A entnommenen Gehäuseteils.
Figur 6 zeigt einen Schnitt durch eine Variante eines erfindungsgemäßen Gehäuseteils.
Figur 7 zeigt eine Draufsicht auf eine ringförmige Federplatte.
Figur 8 zeigt eine Draufsicht auf eine Variante eines erfindungsgemäßen Gehäuseteils zur Verwendung mit der ringförmige Federplatte nach Fig. 7.

Bauteile, die in mehreren Figuren dargestellt sind, tragen dieselben Referenzzeichen.

### DETAILLIERTE BESCHREIBUNG

Die Offenbarung betrifft ein Gehäuseteil für eine Klemm- und/oder Bremsvorrichtung und eine Klemm- und/oder Bremsvorrichtung mit ein oder mehrerer solcher Gehäuseteile.

Wenn in diesem Dokument von der Vorrichtung "Klemme" oder "Klemmvorrichtung", der "Klemmkraft" oder dem Vorgang des "Klemmens" gesprochen wird, dann ist gleichermaßen auch die Vorrichtung der "Bremse" oder "Bremsvorrichtung" bzw. die "Bremskraft" bzw. der Vorgang des "Bremsens" umfasst.

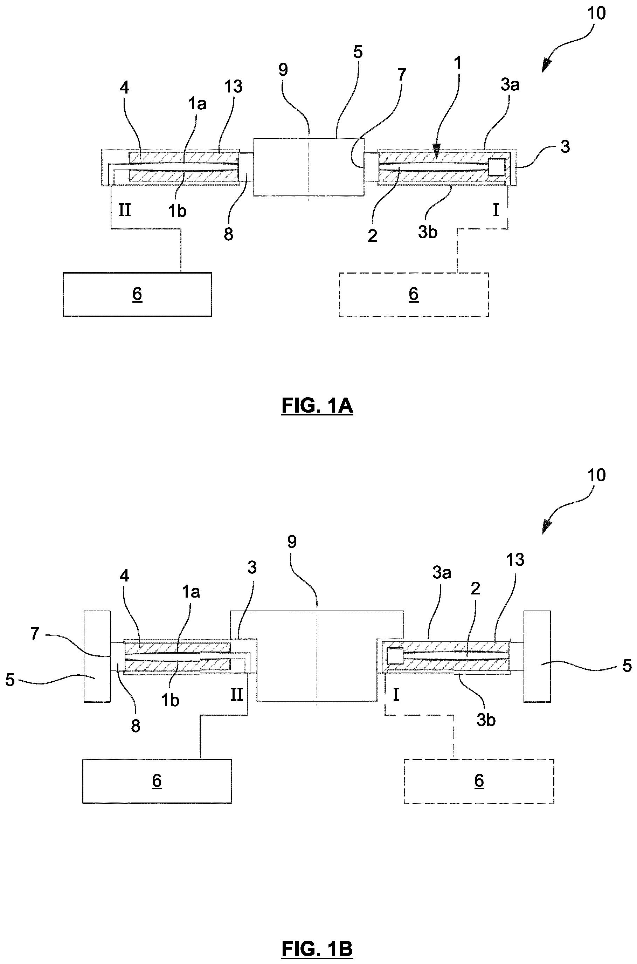

Die Figuren 1A bis 5A zeigen schematisch Querschnitte durch eine solche erfindungsgemäße Klemmvorrichtung 10 mit einem Gehäuse 3, das zwei erfindungsgemäße Gehäuseteile 3a, 3b umfasst, sowie mit einer in dem Gehäuse 3 angeordneten Feder 1, die mindestens zwei elastischen Elementen 1a, 1b, jeweils in Form einer ringförmigen Federplatte 1a, 1b, umfasst.

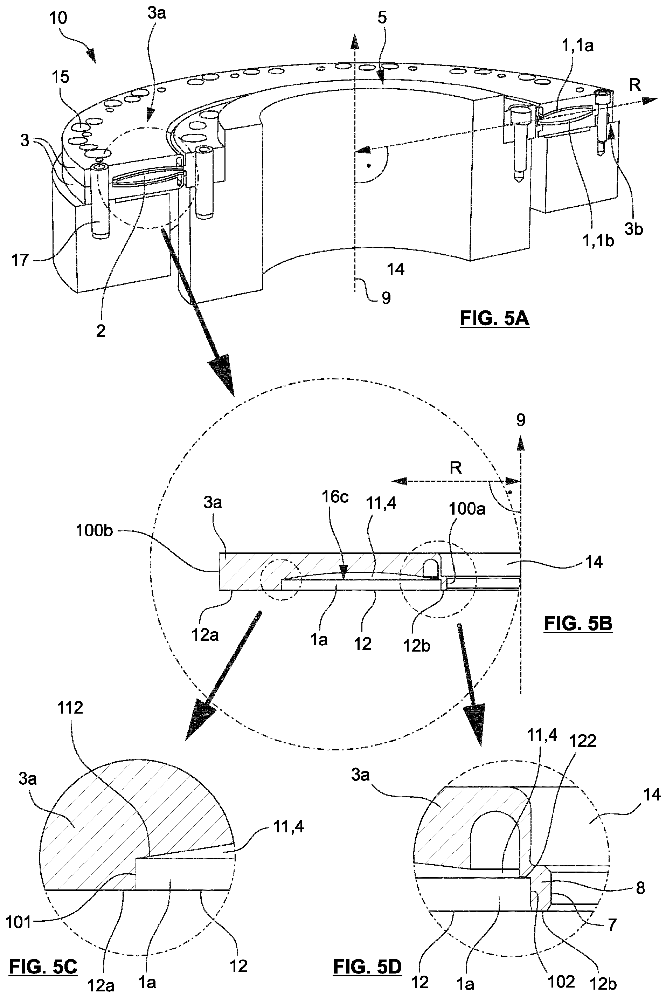

Die erfindungsgemäße Klemmvorrichtung 10 umfasst dabei ein Gehäuse 3 umfassend ein erstes erfindungsgemäßes Gehäuseteil 3a und ein zweites erfindungsgemäßes Gehäuseteil 3b. Die erfindungsgemäßen Gehäuseteile 3a, 3b umfassen dabei die eingangs erwähnten Mittel, nämlich einen zweiten Rand 100a des Gehäuseteils 3a, 3b und einen ersten Rand 100b des Gehäuseteils 3a, 3b, wobei die Ränder 100a, 100b einander gegenüberliegend sind; eine zwischen dem zweiten Rand 100a und dem ersten Rand 100b angeordnete ringförmige Aussparung 11 zum Einklemmen einer ringförmigen Federplatte 1a, 1b zwischen einer durch die Aussparung 11 definierten ersten Anlagefläche 101 des Gehäuseteils 3a, 3b und einer durch die Aussparung 11 definierten zweiten Anlagefläche 102 des Gehäuseteils 3a, 3b; ein Klemmelement 8 mit einer Klemmfläche 7, die ausgelegt ist, wenn die Federplatte 1a, 1b derart in der Aussparung 11 zwischen der ersten Anlagefläche 101 und der zweiten Anlagefläche 102 eingeklemmt ist, dass sich ein erstes Ende der Federplatte 1a, 1b an der ersten Anlagefläche 101 abstützt und ein zweites Ende der Federplatte 1a, 1b auf die zweite Anlagefläche 102 drückt, eine Klemm- und/oder Bremskraft auf ein zu klemmendes und/oder zu bremsendes Objekt 5 zu übertragen; eine erste Gehäusekontaktfläche 12a, die sich zwischen dem ersten Rand 100b und der ersten Anlagefläche 101 erstreckt; wobei auf der ersten Gehäusekontaktfläche 12a mindestens eine Nut 110 zur Aufnahme eines Dichtungsmittels angeordnet oder eingefügt ist. Diese Mittel werden im Zusammenhang mit den Figuren 5, 6 und 8 näher erläutert.

Die beiden Gehäuseteile 3a, 3b der in den Figuren 1A bis 5A dargestellten erfindungsgemäßen Klemmvorrichtung 10 sind derart zueinander angeordnet und miteinander befestigt sind, dass die erste Gehäusekontaktfläche 12a des ersten Gehäuseteils 3a der ersten Gehäusekontaktfläche 12a des zweiten Gehäuseteils 3b zugewandt ist, und dass die Aussparungen 11 der ersten und zweiten Gehäuseteile 3a, 3b zusammen einen Innenraum 13 innerhalb des Gehäuses 3 bilden. Die Klemmvorrichtung 10 umfasst ferner eine in dem Innenraum 13 angeordnete Feder 1 umfassend eine erste ringförmige Federplatte 1a und eine zweite ringförmige Federplatte 1b, wobei die Federplatten 1a, 1b derart innerhalb des Innenraums 13 angeordnet sind, dass in dem Innenraum 13 mindestens ein Druckraum 2, 4 gebildet wird, der zumindest teilweise durch die Federplatten 1a, 1b begrenzt wird, wobei der Druckraum 2, 4 be- oder entlüftbar ist und mit Überdruck eines dem Gehäuse 3 zuführbaren Druckmediums beaufschlagbar ist, wobei die erste Federplatte 1a zwischen der ersten Anlagefläche 101 des ersten Gehäuseteils 3a und der zweiten Anlagefläche 102 des ersten Gehäuseteils 3a eingeklemmt ist; wobei die zweite Federplatte 1b zwischen der ersten Anlagefläche 101 des zweiten Gehäuseteils 3b und der zweiten Anlagefläche 102 des zweiten Gehäuseteils 3b eingeklemmt ist; und wobei die Federplatten 1a, 1b derart relativ zu den mindestens einen Druckraum 2, 4 angeordnet sind, dass durch Be- oder Entlüften des Druckraums 2, 4 oder Beaufschlagung des Druckraum 2, 4 mit Überdruck, eine Biegung mindestens einer der Federplatten 1a, 1b veränderbar ist und dadurch die Vorrichtung 10 zwischen einem geöffneten Zustand, in dem das Objekt 5 von den Klemmflächen 7 beabstandet ist, und einem geschlossenen Zustand, in dem ein oder mehrere der Klemmflächen 7 eine Klemm- und/oder Bremskraft auf das Objekt 5 übertragen, wechselt.

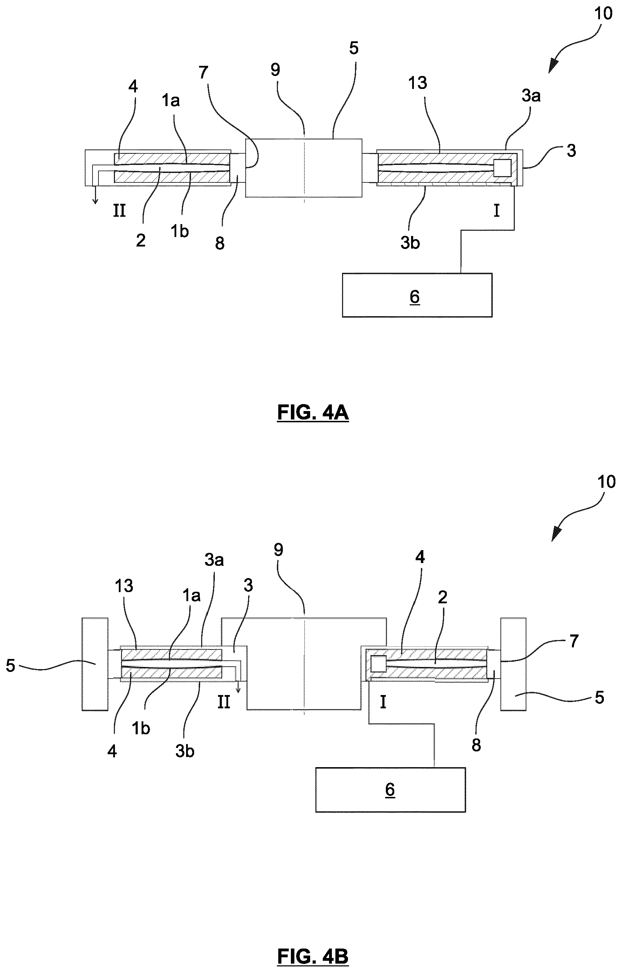

Die Figuren 1A, 1B, 4A und 4B zeigen jeweils solche Klemmvorrichtungen 10 im geschlossenen Zustand indem die Klemmfläche 7 des Klemmelements 8 den Umfang des Objekts 5 berührt. Das Klemmelement 8 wird auch als Klemmlippe bezeichnet. Das Klemmelement 8 kann einstückig mit den Übrigen Teilen des Gehäuseteils 3a, 3b ausgebildet sein oder kann ein von den übrigen Teilen strukturell separiertes Bauteil des Gehäuseteils 3a, 3b sein.

Die Klemmkraft bzw. -wirkung der Klemmfläche 7 auf das zu klemmende Objekt 5 erfolgt in einer Klemmebene, die durch zwei Vektoren aufgespannt wird, die jeweils einen Radius der ringförmigen elastische Elemente 1a, 1b bzw. ringförmigen Aussparung 11 bilden (vgl. Fig. 5A). Die Achse 9 kann durch den Mittelpunkt des Rings der hier als ringförmig beschriebenen Bauteile verlaufen und kann daher als Hauptachse der Klemmvorrichtung 10 bezeichnet werden, die senkrecht zur Klemmebene verlaufen kann. Wenn in diesem Dokument von "innerem/innerer" und "äußerem/äußerer" Gehäusekontaktfläche, Anlagefläche, Rand oder Ende gesprochen wird, so können innere/r/s Gehäusekontaktfläche, Anlagefläche, Rand, oder Ende näher an der Achse 9 sein als entsprechend äußere/r/s Gehäusekontaktfläche, Anlagefläche, Rand, oder Ende. Entsprechendes kann auch für andere Bauteile gelten. Andere Bedeutungen der Begriffe "innerem/innere(r)" und "äußerem/äußere(r)" sind möglich.

Die Klemmvorrichtung 10 kann um diese Hauptachse 9 rotationssymmetrisch ausgestaltet sein. Die Hauptachse 9 kann in etwa oder genau mittig durch eine Öffnung der Klemmvorrichtung 10 verlaufen (Öffnung 14 in Fig. 5B). In den Figuren 1A, 4A ist das zu klemmende Objekt 5, beispielsweise eine rotierbare Welle einer Maschine oder eines Tischs, innerhalb der Öffnung 14 platziert und die Klemmkraft der Klemmvorrichtung ist deshalb innerhalb der Klemmebene radial nach innen zur Hauptachse 9 hin (senkrecht zur Hauptachse 9) gerichtet. In Figuren 1B, 2B, 3B, 4B ist das zu klemmende Objekt 5 außerhalb der Klemmvorrichtung 10 platziert und die Klemmkraft der Klemmvorrichtung ist deshalb innerhalb der Klemmebene radial nach außen von der Hauptachse 9 weg (senkrecht zur Hauptachse 9) gerichtet.

In Fig. 1A, 2A, 3A, 4A befindet sich das Klemmelement 8 zwischen Feder 1 und Öffnung 14 bzw. Hauptachse 9. In Fig. 1B, 2B, 3B, 4B hingegen umgibt das zu klemmende Objekt 5 zumindest teilweise die Klemmvorrichtung 10, sodass sich dort das Klemmelement 8 zwischen Objekt 5 und Öffnung 14 bzw. Hauptachse 9 befindet. In Fig. 1B, 2B, 3B, 4B kann in Öffnung 14 statt dem zu klemmenden Objekt 5 ein die Öffnung 14 zumindest teilweise füllendes Bauteil eingebracht sein, durch das sich die Hauptachse 9 erstreckt.

In Figuren 1A bis 5A ist jeweils die Feder 1 zwischen zwei Anlageflächen (erste Anlagefläche 101 und zweite Anlagefläche 102 in Fig. 5C und 5D) innerhalb des Gehäuses 3 der Klemmvorrichtungen 10 eingeklemmt und erstreckt sich zwischen den beiden Anlageflächen. Im drucklosen Ausgangszustand der Vorrichtung 10 in den Figuren 1A bis 2B kann die Feder 1 leicht gebogen sein, um in diesem Zustand fest im Gehäuse 3 fixiert zu sein und dasselbe kann für jeden anderen Zustand der Vorrichtung 10 gelten, wobei der Grad der Biegung der Feder 1 davon abhängt, in welchem Zustand sich die Vorrichtung 10 befindet. Ist die Vorrichtung 10 in einem Zustand, in dem die Feder 1 gebogen ist (z.B. stärker gebogen als im drucklosen Ausgangszustand, wie etwa im geöffneten Zustand), kann Entlüften eines zweiten (z.B. inneren) Druckraums 2 der Feder 1 und Belüftung eines ersten (z.B. äußeren) Druckraums 4 zum zumindest teilweisen Entspannen der Feder 1 führen während die Feder 1 an die radialen Anlageflächen drückt, deren Abstand sich etwas vergrößert, so dass dadurch das Gehäuse 3 im Bereich des Klemmelements 8 bzw. der Klemmfläche 7 elastisch verformt wird und die Klemmfläche 7 dadurch das Objekt 5 berührt und mit einer (vordefinierten) Klemmkraft gegen das Objekt 5 gedrückt wird, um das Objekt 5 festzuklemmen. Das Objekt 5 ist festgeklemmt und die Klemmvorrichtung 10 ist im geschlossenen Zustand, wie in Figuren 1A und 1B gezeigt. Im geschlossenen Zustand der Vorrichtung 10 kann die Feder 1 auch nach der teilweisen Entspannung immer noch leicht gebogen sein, um in diesem Zustand fest im Gehäuse 3 fixiert zu sein.

Das Klemmelement 8 kann dabei ein elastisches Element, wie etwa eine Federgabel, sein, das im drucklosen Ausgangszustand der Vorrichtung 10 durch die Federkraft der (leicht) verbogenen Feder 1 aus einer Ausgangsposition, in der das elastische Element entspannt ist, in eine verspannte Position gebracht wird, beispielsweise durch Verbiegen der Federgabel 8, bis im drucklosen Ausgangszustand ein Gleichgewicht zwischen einer Rückstellkraft des elastischen Elements 8 und der Federkraft der Feder 1 entsteht. Bei diesem Gleichgewicht kann die Klemmfläche 7 gegen das Objekt 5 drücken.

Durch zusätzliche Beaufschlagung des ersten Druckraums 4 im geschlossenen Zustand mit Druckluft (beispielsweise mit 4 bar oder 6 bar) besteht die optionale Möglichkeit die Klemmkraft um einen vorbestimmten Wert zu erhöhen. Dies ist in den Figuren 1A, 1B durch die optionale zusätzliche Druckluftpumpe (Booster) 6 und die Schraffierung (Druckluft) im ersten Druckraum 4 angedeutet. Der auf Außenseite (Ober- bzw. Unterseite) der Federplatten angeordnete Druckraum 4 ("äußere Druckraum 4") kann mittels einer Öffnung im Gehäuse 3 mit einem Luftanschluss I (auch als "Close" bezeichnet) verbunden sein, an dem die Druckluftpumpe 6 angeschlossen sein kann.

Hierdurch ist z.B. ein Ansteuern der Vorrichtung 10 derart möglich, dass ein Wechsel zwischen einer (im drucklosen Zustand) gebremsten Bewegung des beaufschlagten Objekts 5 und einem vollständigen Klemmen des Objekts (bei einer ausreichenden Druckbeaufschlagung) erfolgt.

Auch wenn hier beispielhaft zwei Druckräume 2, 4 gezeigt und beschrieben sind, so ist die Klemmvorrichtung 10 auch mit einem einzigen Druckraum betreibbar, der beispielsweise der zwischen den Federplatten (auf der Innenseite der Federplatten) angeordnete Druckraum 2 ("innere Druckraum 2") oder der äußere Druckraum 4 sein kann.

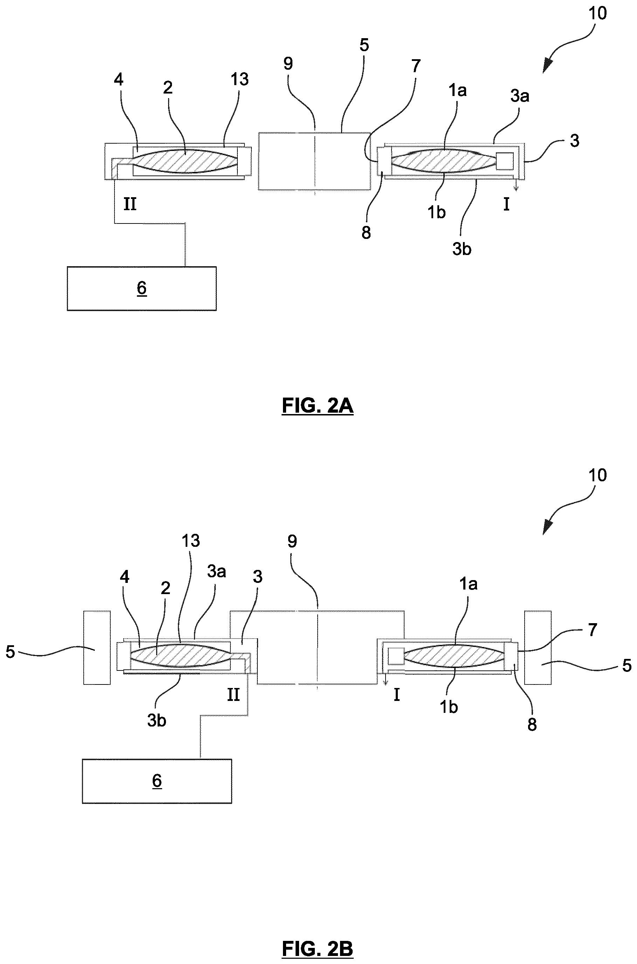

Figuren 2A und 2B zeigen die Klemmvorrichtungen 10 aus den Figuren 1A und 1B jeweils im geöffneten Zustand in dem die Klemmfläche 7 den Umfang des Objekts 5 nicht berührt bzw. von dem Umfang des Objekts 5 beabstandet ist. Der innere Druckraum 2 kann mittels einer Öffnung im Gehäuse 3 mit einem Luftanschluss II (auch als "Open" bezeichnet) verbunden sein, an dem eine Druckluftpumpe 6 angeschlossen sein kann.

Durch Beaufschlagung des zweiten(z.B. inneren) Druckraums 2 durch die Druckluftpumpe 6 mit Druckluft (beispielsweise 4 bar oder 6 bar) und Entlüften des ersten (z.B. äußeren) Druckraums 4 wird die Feder 1, verglichen mit dem geschlossenen Zustand aus Fig. 1A, 1B, stärker (konvex) verbogenen bzw. verspannt und es kommt zu einer radialen Verkürzung der Feder 1 bzw. des Abstandes zwischen den beiden Anlageflächen. Die Klemmfläche 7 hebt von dem Objekt 5 ab, um die Klemmung aufzuheben. Das Objekt 5 ist frei beweglich (z.B. um Achse 9 rotierbar oder linear entlang Achse 9 beweglich) und die Klemmvorrichtung 10 ist geöffnet.

Zwischen dem geschlossenen Zustand und dem geöffneten Zustand der Vorrichtung 10 kann hin- und her gewechselt werden.

Solche pneumatischen Klemmen 10 haben gegenüber hydraulischen Klemmen einer Reihe von Vorteilen.

Durch die Verwendung der Kombination aus elastischer Komponente, hier eine Feder 1 samt elastische Elemente 1a, 1b, und Druckluft werden beispielsweise sehr kurze Reaktionszeiten beim Umschalten zwischen dem geöffneten und geschlossenen Zustand erreicht und ebenso eine sichere Klemmung des Objekts 5 bewirkt. Die Feder 1 kann bevorzugt plattenförmig ausgestaltet sein, wie in Fig. 5 näher gezeigt, wobei zwei aufeinanderliegende elastische Elemente 1a, 1b die Feder 1 und den innere Druckraum 2 der Feder 1 zwischen den Platten 1a, 1b bilden. Die Platten 1a, 1b können ebenfalls ringförmig sein, wie in Fig. 5 gezeigt, und können optional zusätzlich radiale Schlitze aufweisen, so dass eine Veränderung des Innendurchmessers mit besonders geringen Kräften möglich ist. Die elastischen Elemente 1a, 1b können, zumindest im Bereich von Schlitzen, mit Gummi beschichtet sein, um die für die Druckluft nötige Dichtheit herzustellen. Die elastischen Elemente 1a, 1b sind generell so druckfest und so elastisch biegbar ausgebildet und in dem Gehäuse 3 der Klemmvorrichtung 10 derart angeordnet, dass innerhalb der Feder 1 zwischen den elastischen Elemente 1a, 1b der innere Druckraum 2 gebildet wird und zwischen eines jeden elastischen Elements 1a, 1b und dem Gehäuse 3 bzw. den Gehäuseteilen 3a, 3b der Klemmvorrichtung 10 der äußere Druckraum 4 gebildet wird. Figur 5 zeigt eine dreidimensionale Ansicht einer Klemmvorrichtung 10 ähnlich zu Figuren 1A und 2A.

Durch Belüften oder Beaufschlagen mit Druckluft des ersten (z.B. äußeren) Druckraums 4 und Entlüften des zweiten (z.B. inneren) Druckraums 2, wie in Fig. 1A gezeigt, wird die Feder 1 zumindest teilweise entspannt und bewirkt eine Klemmkraft auf das zu klemmende Objekt 5, insbesondere auf den Umfang einer Welle 5. Dadurch wird bei Energie- bzw. Druckausfall das Objekt 5 geklemmt bzw. die Welle 5 sofort zum Stillstand gebracht und bietet deshalb eine Sicherheitsklemmung. Solche pneumatischen Klemmen 10 können je nach Größe Haltemomente von mehreren 100 Nm und bis zu mehreren 1000 Nm erzielen, die durch zusätzliches Beaufschlagen des ersten (z.B. äußeren) Druckraums 4 mit Druckluft, wie in Fig. 1A durch eine Druckpumpe 6 (Booster) angedeutet, noch erhöht werden können. Hier genügt eine Druckluft von wenigen bar (beispielsweise 4 bar oder 6 bar) für eine Bereitstellung eines Mehrfachen der Haltemomente, die ohne Booster erreicht werden. Dabei wird die Tatsache genutzt, dass geringe transversale Verbiegungen der Platten 1a, 1b (senkrecht zu deren Längsachse) beim Umschalten zwischen geöffneten und geschlossenen Zustand der Klemme 10 große Federkräfte erzeugen, die zum Klemmen oder zum Lösen vorgespannter Klemmvorrichtungen 10 genutzt werden können. Somit wird ein sicheres Klemmen und Lösen auch von sich schnell drehenden Maschinenwellen 5 ermöglicht.

Auch sind bei Pneumatikmaterial die Kosten und der Montageaufwand im Vergleich zur Hydraulikmaterial niedriger und es entsteht durch Verwendung von Druckluft keinerlei Mehraufwand zur Herstellung von Sauberkeit an der Anlage. Auch ermöglichen solche pneumatischen Klemmen eine geringe Baugröße, da eine geringe transversale Verbiegung und eine geringe (Änderungen der) longitudinale Ausdehnung der Feder, und dadurch geringe Volumina der Druckräume, genügen, um die erforderlichen Klemmkräfte aufzubringen.

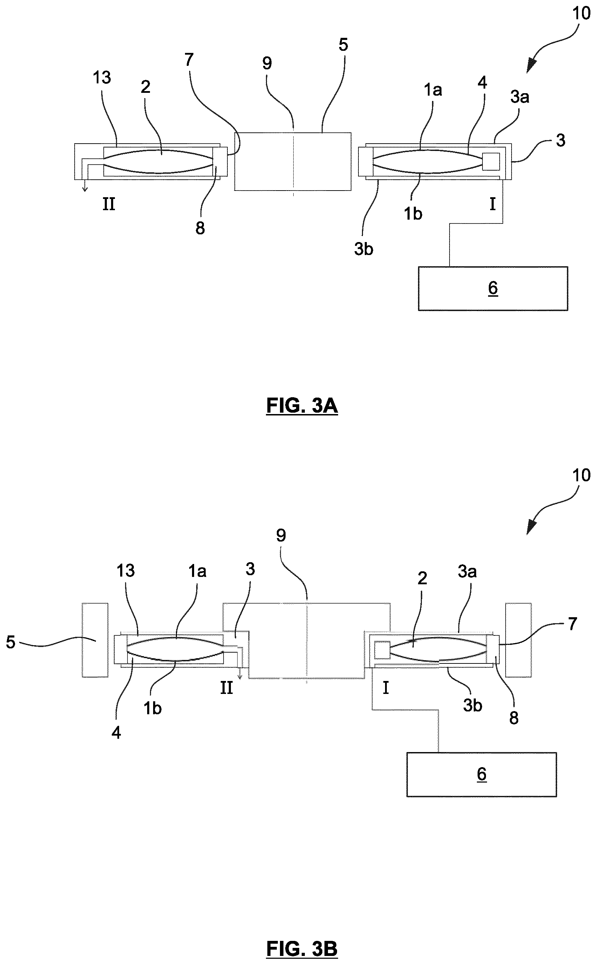

Bei pneumatischen Klemmen unterscheidet man prinzipiell zwischen passiven Klemmvorrichtungen 10, wie in Fig. 1A bis 2B gezeigt, und aktiven Klemmvorrichtungen 10, wie in Fig. 3A bis 4B gezeigt.

Die Feder 1 kann im drucklosen Ausgangszustand unterschiedlich stark (transversal) verbogen sein und damit unterschiedlich stark radial verkürzt sein. Die Innenseite des Gehäuses 3 kann an die Verbiegung der elastischen Elemente 1a, 1b angepasst sein oder diese definieren. Eine entsprechende Anschlagsfläche für die elastischen Elemente 1a, 1b kann beispielsweise durch eine Gehäuseinnenwandung gebildet werden. Die Gehäuseinnenwandung kann komplementär (z.B. konkav) zu einer (z.B. konvexen) Verbiegung der elastischen Elemente 1a, 1b ausgebildet sein.

Bei passiven Klemmvorrichtungen 10 wird im drucklosen Ausgangszustand die Feder 1 in der Regel leicht elastisch (z.B. konvex) verbogen bzw. ist vorgespannt und die Klemmvorrichtungen 10 kann geschlossen sein (Fig. 1A, 1B). Die Klemmvorrichtung 10 wird nur durch Krafteinwirkung von Innen über Beaufschlagung des zweiten (z.B. inneren) Druckraums 2 mit Druckluft geöffnet (Fig. 2A, 2B). Meist ist die Feder 1 im drucklosen Ausgangszustand etwas verbogen, so dass diese im Klemmfall oder im Fall von Druckabfall die durch die in der Feder 1 gespeicherte Energie gegebene Federkraft auf das zu klemmende Objekt 5 als Klemmkraft übertragen wird, um das Objekt 5 zu klemmen.

Bei aktiven Klemmvorrichtungen 10 wird im drucklosen Ausgangszustand (Fig. 3A, 3B) die Feder 1 stärker, insbesondere stärker konvex, transversal nach außen gekrümmt als bei passiven Klemmvorrichtungen, so dass sich der Abstand zwischen den beiden radialen Anlageflächen verkürzt und die Klemmvorrichtung 10 geöffnet ist. Es wird keine Klemmkraft über Klemmfläche 7 auf das Objekt 5 bewirkt. Das Objekt ist frei, da die Klemmfläche 7 das Objekt 5 nicht berührt bzw. von dem Objekt 5 beabstandet ist.

Durch plastische Verformung der Federplatten 1a, 1b kann die Feder 1 bei gleichem Gehäuse 3 im drucklosen Ausgangszustand stärker transversal nach außen gekrümmt und damit stärker radial verkürzt sein, als bei passiven Klemmvorrichtungen. Diese geringere radiale Ausdehnung der Federplatten 1a, 1b im drucklosen Ausgangszustand kann zu einem geöffneten Zustand der Klemmvorrichtung 10 im drucklosen Ausgangszustand führen. Auch bei plastischer Verformung sind die Federplatten 1a, 1b elastisch gebogen und drücken gegen die Anlageflächen damit die Feder im Gehäuse fixiert ist. Der Innenraum des Gehäuses bzw. die Aussparungen können die durch plastische Verformung stärker bewirkte Krümmung im Ausgangszustand aufnehmen.

Die Klemmkraft muss nun aktiv von außen induziert werden, wie in Fig. 4A und 4B gezeigt, um die Klemme in den geschlossenen Zustand zu überführen. Hier wird durch eine Druckluftpumpe 6 Druckluft in den ersten(z.B. äußeren) Druckraum 4 eingebracht und somit die Feder 1 derart von außen mit Druckluft beaufschlagt, dass die Feder 1 aktiv entspannt wird, sich die Krümmung der Feder 1 reduziert, sich der Abstand zwischen den beiden Anlageflächen vergrößert, und sich das Gehäuse 3 im Bereich des Klemmelements 8 bzw. der Klemmfläche 7 elastisch verformt, sodass die Klemmfläche 7 das Objekt 5 berührt und eine Klemmkraft auf das Objekt 5 bewirkt und das Objekt 5 dadurch festgeklemmt wird. Die aktive Klemmvorrichtung 10 ist dann im geschlossenen Zustand.

Je nach Anwendungsgebiet und vorgeschriebenen Sicherheitsbestimmungen wird daher auf ein Aktiv- oder Passivklemmsystem 10 zurückgegriffen. Ist primär eine Sicherheitsklemmung gewünscht, wird in der Regel eine passive Klemmvorrichtung verwendet. Mit solchen pneumatischen Passivklemmsystemen ist es möglich, bereits im drucklosen Zustand bei einer entsprechenden Montage der Vorrichtung in einer Gesamtvorrichtung eine vorbestimmte Klemmkraft zu erzeugen, mit welcher das zu klemmende Objekt 5 beaufschlagt wird. Durch die Beaufschlagung mit Überdruck oder Unterdruck können die auf dieses Objekt übertragenen Kräfte erhöht, reduziert oder ganz aufgehoben werden, was vielfältige Anwendungen eröffnet. Soll hingegen mit der Klemmvorrichtung primär ein bewusster Arbeitsvorgang, wie ein Werkzeugwechsel, durchgeführt werden, wird in der Regel eine aktive Klemmvorrichtung verwendet.

Figur 5A zeigt einen Querschnitt durch eine erfindungsgemäße pneumatische Klemmvorrichtung 10 in dreidimensionaler Darstellung, wobei hier exemplarisch die Vorrichtung 10 mit nach Innen gerichteter Klemmkraft gemäß der Figure 1A, 2A, 3A und 4A gezeigt ist. Die Figuren 5B bis 8 zeigen dann weitere Details dieser Vorrichtung 10. Jedoch gilt das für die Vorrichtung in den Figure 5A bis 8 Gezeigte entsprechend für die Vorrichtung 10 mit nach Außen gerichteter Klemmkraft gemäß der Figure 1B, 2B, 3B und 4B.

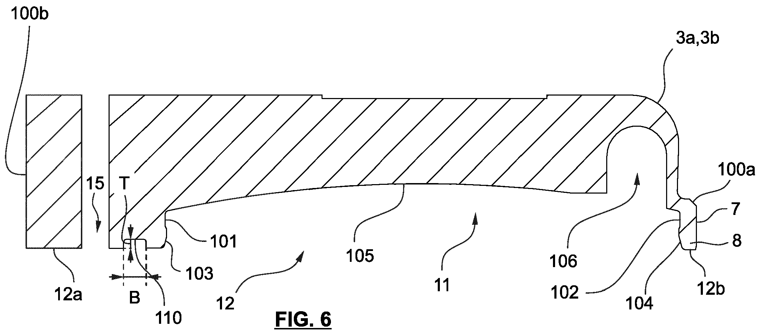

Wie in Figur 5A dargestellt, umfasst das Gehäuse 3 der erfindungsgemäßen Klemmvorrichtungen 10 zwei erfindungsgemäße Gehäuseteile 3a, 3b, jeweils mit hier nicht gezeigter Nut (vgl. 110 in Fig. 6), wobei die Gehäuseteile 3a, 3b mit Befestigungsmittel 17, wie etwa Schrauben, durch Löcher 15 miteinander befestigt und so montiert sind, dass im montierten Zustand die Nute der Gehäuseteile aufeinanderfallen und die beiden Gehäuseteile 3a, 3b den Innenraum 13 zwischen den Gehäuseteilen 3a, 3b innerhalb des Gehäuses 3 definieren in dem die Feder 1 samt deren ringförmigen Federplatten 1a, 1b angeordnet sind. Die Gehäuseteile 3a, 3b definieren jeweils eine Aussparung 11, die ebenfalls ringförmig ist und die der Aufnahme der ringförmigen Federplatten 1a, 1b dienen, wie in Figuren 5A bis 5D dargestellt. Zumindest ein Teil der ersten Anlagefläche 101 des Gehäuseteils kann (im Wesentlichen) senkrecht zur radialen Richtung R der ringförmigen Aussparung 11 verlaufen und/oder ein Teil der zweiten Anlagefläche 102 des Gehäuseteils kann (im Wesentlichen senkrecht) zur radialen Richtung R der ringförmigen Aussparung 11 verlaufen.

Durch die Mitte des Gehäuses 3 hindurch erstreckt sich eine Öffnung 14 (Fg. 5B) in die das zu klemmende Objekt 5, wie etwa eine Welle, eingeführt werden kann. Das Gehäuse kann sich bis zu 360° um diese Öffnung herum erstrecken und umschließt zumindest teilweise das Objekt 5 in zumindest einer Ebene die als Klemmebene bezeichnet wird. Die zentrale Hauptachse 9 der Klemmvorrichtungen verläuft mittig durch die Öffnung 14 und senkrecht zu der Klemmebene. In Klemmvorrichtungen nach Fig. 1A, 2A, 3A, 4A, 5A verläuft die Hauptachse 9 mittig durch die Welle entlang deren Längsachse.

Entlang des Umfangs des Gehäuses 3 oder der Öffnung 14 befindet sich eine oder mehrere der Klemmflächen 7 welche im Falle einer elastischen Verformung des Gehäuses 3 im Bereich des Klemmelements 8 oder der Klemmfläche 7 die Klemmkraft auf den äußeren Umfang des Objekts 5 bewirkt und dadurch das Objekt 5 klemmen kann. Für eine wirksame Öffnung und Schließung der Klemmvorrichtung 10 im Bezug auf das zu klemmende Objekt 5, ohne Gefahr der Beschädigung des Objekts 5, ist eine symmetrische Verteilung der Klemmkraft entlang der Klemmfläche 7 bzw. entlang des Umfangs des Objekts 5 wünschenswert. Eine nicht symmetrische Verteilung der Klemmkraft kann zu Beschädigungen des Objekts 5 führen. Vorzugsweise sind eine oder beide Anlageflächen 101, 102 innerhalb der Klemmebene kreisförmig ausgestaltet. Vorzugsweise ist die Klemmfläche 7 innerhalb der Klemmebene kreisförmig ausgestaltet. Das Klemmelement 8 kann ringförmig ausgestaltet sein. Alle hierin beschriebenen ring- oder kreisförmigen Bauteile können jeweils einzeln oder in Kombination als Mittelpunkt den Schnittpunkt der Hauptachse 9 mit der Klemmebene aufweisen (z.B. Mittelpunkt der Öffnung 14).

Figuren 5B-D zeigen eine Ausführung des erfindungsgemäßen Gehäuseteils (hier das obere Gehäuseteil 3a aus Fig. 5A). Das erfindungsgemäße Gehäuseteil 3a, 3b umfasst dabei die eingangs erwähnten Mittel, nämlich einen zweiten Rand 100a (hier der innere Rand) des Gehäuseteils 3a, 3b und einen ersten Rand 100b (hier der äußere Rand) des Gehäuseteils 3a, 3b, wobei die Ränder einander gegenüberliegend angeordnet sind; eine zwischen dem zweiten Rand 100a und dem ersten Rand 100b angeordnete ringförmige Aussparung 11 zum Einklemmen einer ringförmigen Federplatte 1a, 1b zwischen einer durch die Aussparung 11 definierten ersten Anlagefläche 101 (hier die äußere Anlagefläche) des Gehäuseteils 3a, 3b und einer durch die Aussparung 11 definierten zweiten Anlagefläche 102 (hier die innere Anlagefläche) des Gehäuseteils 3a, 3b; ein Klemmelement 8 mit einer Klemmfläche 7, die ausgelegt ist, wenn die Federplatte 1a, 1b derart in der Aussparung 11 zwischen der ersten Anlagefläche 101 und der zweiten Anlagefläche 102 eingeklemmt ist, dass sich ein erstes Ende der Federplatte 1a, 1b an der ersten Anlagefläche 101 abstützt und ein zweites Ende der Federplatte 1a, 1b auf die zweite Anlagefläche 102 drückt, eine Klemm- und/oder Bremskraft auf ein zu klemmendes und/oder zu bremsendes Objekt 5 (vgl. Fig. 5A, 5B, Objekt 5 in der Öffnung 14) zu übertragen; eine erste Gehäusekontaktfläche 12a (hier die äußere Gehäusekontaktfläche), die sich zwischen dem ersten Rand 100b und der ersten Anlagefläche 101 erstreckt; wobei auf der ersten Gehäusekontaktfläche 12a mindestens eine Nut 110 zur Aufnahme eines Dichtungsmittels angeordnet bzw. eingefügt ist. Bevorzugt kann der in radialer Richtung R durch die Nut 110 gebildete Querschnitt der Nut 110 in Form eines V (V-förmig, Öffnung des V in Richtung der Fläche 12a), eines an einer Seite zur Fläche 12a hin offenen Rechtecks, eines U (U-förmig, Öffnung des U in Richtung der Fläche 12a) oder eines Halbkreises sein. Das Gehäuseteil 3a, 3b kann eine zweite Gehäusekontaktfläche 12b (hier die innere Gehäusekontaktfläche), die sich zwischen der zweite Anlagefläche 102 und dem zweiten Rand 100b erstreckt, umfassen.

Das Gehäuseteil 3a, 3b erstreckt sich zwischen dem hier näher an der Achse 9 befindlichen, zweiten Rand 100a und dem ersten Rand 100b, der sich hier weiter weg von der Achse 9 befindet, und kann vorzugsweise ringförmig ausgestaltet sein. Das Gehäuseteil 3a umfasst die ringförmige Aussparung 11 zum Einklemmen der ringförmigen Federplatte 1a, wobei das Gehäuseteil 3a eine durch die Aussparung 11 definierte Innenfläche (vgl. 105 in Fig. 6) aufweist. Die ringförmige Aussparung 11 definiert vorzugsweise eine ringförmige Öffnung 12 im Gehäuseteil, wobei die ringförmige Öffnung zwischen der ersten (z.B. ringförmigen) Gehäusekontaktfläche 12a des Gehäuseteils und der zweiten (z.B. ringförmigen) Gehäusekontaktfläche 12b des Gehäuseteils gebildet ist.

Wenn die Federplatte 1a mit der ersten, oberen Seitenfläche (vgl. 16c in Fig. 5B) zugewandt zu der Innenfläche 105 durch die Öffnung 12 in die Aussparung 11 eingeführt und in der Aussparung 11 eingeklemmt wird, wird zwischen der Innenfläche 105 und der Federplatte 1a der erste Druckraum 4 gebildet.

Wie in den Figuren 5C und 5D gezeigt, erstreckt sich die dargestellte Federplatte 1a der Feder 1 von einer ersten Anlageflächen 101 innerhalb des Gehäuseteils 3a bis zu einer zweiten Anlagefläche 102 innerhalb des Gehäuseteils 3a und kann diese berühren. Die erste Anlagefläche 101 ist dabei vom Mittelpunkt der Öffnung 14 ausgesehen radial weiter außerhalb angeordnet als die zweite Anlagefläche 102.

Figur 5C zeigt den Abschnitt des in Figur 5B dargestellten Gehäuseteils 3a in dem die obere Platte 1a der Feder 1 auf die erste Anlagefläche 101 trifft und mit dieser vorzugsweise in Berührung steht. Figur 5D zeigt den Abschnitt des in Figur 5B dargestellten Gehäuseteils 3a in dem die obere Platte 1a der Feder 1 auf die zweite Anlagefläche 102 trifft und mit dieser vorzugsweise in Berührung steht. Es ist jedoch auch möglich, dass sich radial zwischen der Federplatte 1a und ein oder mehreren der Anlageflächen 101, 102 jeweils ein oder mehrere weitere Komponenten befinden, über die die Federplatte 1a seine Federkraft auf die Anlageflächen 101, 102 ausübt.

Wie in Figuren 5B-5D ersichtlich, wird die Federplatte 1a in der Aussparung 11 zwischen Anlageflächen 101, 102 des Gehäuseteils 3a eingeklemmt. Jede der Platten der Feder 1 wird in Richtung der Hauptachse 9 der Klemmvorrichtungen 10 durch die Öffnung 12 in die Aussparung 11 des jeweils dazugehörigen Gehäuseteils bei der Montage an den Anlageflächen 101, 102 des Gehäuseteils 3a entlang eingeführt, bis die jeweilige Platte am Ende jeder der beiden Anlageflächen 101, 102 an einen Anschlag 112, 122 stößt und deshalb nicht weiter in die Aussparung 11 eingeführt werden kann. Da die Ausdehnung der Federplatte 1a in der Klemmebene bzw. in radialer Richtung der ringförmigen Aussparung größer sein kann als die Ausdehnung des durch das Gehäuseteil definierten Innenraums, kann die Platte 1a im drucklosen Ausgangszustand verbogen bzw. vorgespannt sein.

Die Federplatte 1a kann mit einem elastischen, abdichtenden Material, vorzugsweise Gummi oder einem anderen geeigneten Material, beschichtet sein (z.B. vulkanisiert).

Figur 6 zeigt mehr Details des erfindungsgemäßen Gehäuseteils 3a aus Figur 5B. Fig. 6 zeigt neben der Aussparung 11, der ersten Anlagefläche 101, und der zweiten Anlagefläche 102 auch die Nut 101, und weitere optionale Mittel wie Innenfläche 105, Loch 15, Schrägen 103, 104 und eine Einbuchtung 106.

Das Gehäuseteil 3a, 3b umfasst eine ringförmige Aussparung 11 zum Einklemmen der ringförmigen Federplatte 1a, 1b, wobei die Aussparung 11 einen ersten ringförmigen Rand an der ersten Gehäusekontaktfläche 12a und einen zweiten ringförmigen Rand an der zweiten Gehäusekontaktfläche 12b einer ringförmigen Öffnung 12 des Gehäuseteils 3a, 3b ausbilden kann, wobei die ringförmige Aussparung 11 die Innenfläche 105 des Gehäuseteils 3a, 3b zwischen dem ersten ringförmigen Rand und dem zweiten ringförmigen Rand definiert, wobei die Innenfläche 105 im Bereich des ersten ringförmigen Rands eine erste Schräge 103 (oder lange Fase genannt) ausbildet und die Innenfläche 105 im Bereich des zweiten ringförmigen Rands eine zweite Schräge 104 (oder lange Fase genannt) ausbildet, wobei die Schrägen 103, 104 derart ausgerichtet sind, dass sich die ringförmige Öffnung 12 zu den ersten und zweiten ringförmigen Rändern bzw. den entsprechenden Gehäusekontaktflächen (vgl. 12a, 12b in Fig. 6) hin vergrößert.

Wenn die Federplatte 1a, 1b mit der ersten Seitenfläche 16c zugewandt zu der Innenfläche 105 in der Aussparung 11 eingeklemmt ist, wird die Beschichtung der Federplatte 1a, 1b einen vorzugsweise abdichtenden Kontakt mit zumindest einem ersten Abschnitt der Innenseite des Gehäuseteils 3a, 3b herstellen. Der erste Abschnitt kann die Anlageflächen 101, 102, die Schrägen 103, 104 und/oder andere Teile der Innenfläche 105 umfassen. Die Einbuchtung 106 ist für die Dynamik des Klemmelements 8 förderlich, welches sich dadurch weiter verbiegen kann.

Die Innenfläche 105 kann die erste, erste Anlagefläche 101 und die zweite Anlagefläche 102 umfassen, die ausgebildet sind dazwischen die Federplatte 1a, 1b einzuklemmen, wobei die erste Schräge 103 zwischen der ersten Anlagefläche 101 und dem ersten ringförmigen Rand der Fläche 12a angeordnet ist und wobei die zweite Schräge 104 zwischen der zweiten Anlagefläche 102 und dem zweiten ringförmigen Rand der Fläche 12a angeordnet ist. Wenn die Federplatte 1a, 1b mit der ersten Seitenfläche 16c zugewandt zu der Innenfläche 105 in der Aussparung 11 eingeklemmt ist, kann die Beschichtung der Platte 1a, 1b mit den Schrägen 103, 104 in vorzugsweise abdichtenden Kontakt gebracht werden.

Wie in Figur 6 gezeigt, kann die erste Anlagefläche 101 eine erste Schräge 103 (oder lange Fase genannt) ausbilden oder in diese übergehen und/oder die zweite Anlagefläche 102 eine zweite Schräge 104 (oder lange Fase genannt) ausbilden oder in diese übergehen, wobei die Schrägen 103, 104 jeweils vorzugsweise derart ausgerichtet sind, dass sich die ringförmige Öffnung 12 bzw. die Aussparung 11 zu den ersten und zweiten Rändern der Flächen 12a, 12b hin vergrößert (vgl. Fig. 6 und 5B).

Das Gehäuseteil 3a, 3b weist auf der ersten Gehäusekontaktfläche 12a eine, vorzugsweise kreisförmige, Rille oder Nut 110 zur Aufnahme von einem Dichtungsmittel (z.B. Dichtmasse oder Gummi O-Ring) auf. Die Rille oder Nut 110 kann das Gehäuseteil 3a, 3b entlang (z.B. parallel) des ersten Rands 100b des Gehäuseteils auf der ersten Gehäusekontaktfläche 12a, zwischen dem ersten Rand 100b des Gehäuseteils und der ersten Anlagefläche 101 oder der Aussparung 11, teilweise oder vorzugsweise vollständig umlaufen. Die Rille oder Nut 110 kann das Gehäuseteil 3a, 3b alternativ oder zusätzlich entlang des Umfangs des Gehäuseteils in dem Bereich des der Fläche 12b, oder zwischen einem zweiten Rand 100a des Gehäuseteils und der zweiten Anlagefläche 102 oder der Aussparung 11, teilweise oder vorzugsweise vollständig umlaufen.

Wie in Fig. 6 exemplarisch dargestellt, kann die erste Gehäusekontaktfläche 12a ferner ein oder mehrere Löcher 15 zum Befestigen des Gehäuseteils 3a an einem anderen Gehäuseteil 3b mittels einem Befestigungsmittel 17 (vgl. Fig. 5B) aufweisen. Die Nut 110 kann sich auf der ersten Gehäusekontaktfläche 12a zwischen den Löchern 15 und der ersten Anlagefläche 101 erstrecken. Die Löcher 15 sind auf der ersten Gehäusekontaktfläche 12a zwischen dem ersten Rand 100b und der Nut 110 angeordnet. Die Nut 110 kann eine Breite B von 1 mm bis 2 mm, 1,4 mm bis 1,6 mm, oder 1,5 mm aufweisen. Die Nut kann eine Tiefe von 0,5 mm bis 1,0 mm, 0,65 mm bis 0, 75 mm, oder 0,7 mm aufweisen. Diese Maße sind besonders vorteilhaft, um gerade soviel wie nötig an Dichtungsmittel (z.B. O-Ring, Klebe- und Dichtwerkstoffe, etc.) aufzunehmen und gezielt anzubringen. Dadurch wird der Verbrauch an Dichtungsmittel reduziert.

Ein Vorteil der Nut 110 ist die Erreichung der für den Betrieb wichtigen Dichtheitsfunktion beim Betrieb mit CLOSE über viele Millionen Zusatzluft(Booster)-Schaltvorgänge unter der Ermöglichung das Dichtungsmittel (Klebe- und Dichtwerkstoff) zwischen den Gehäusehälften gezielt aufzubringen und dadurch den Verbrauch zu reduzieren. Durch die Veränderung des Teilkreisdurchmessers für die Verbindungsschrauben lässt sich die Nut umlaufend zwischen den Anschlüssen OPEN und CLOSE einbringen.

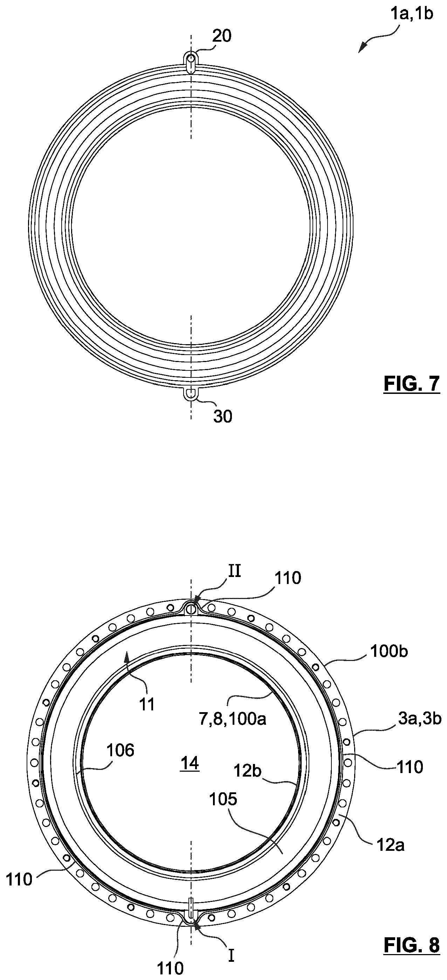

Figur 7 zeigt eine exemplarische Ausführung einer Federplatte 1a, 1b mit einer ersten Anschlussdichtung 30 und/oder einer zweiten Anschlussdichtung 20. Die Dichtungen 20, 20 können aus einem elastischen, abdichtenden Material, wie Gummi sein, und können Teil einer elastischen, abdichtenden Beschichtung (z.B. Gummierung) der Federplatte sein, die beispielsweise auf die Federplatte vulkanisiert ist.

Die erste Anschlussdichtung 30 und die zweite Anschlussdichtung 20 können an gegenüberliegenden Abschnitten des zweiten Rands 100a oder ersten Randes 100b der ringförmige Federplatte angeordnet sein.

Die erste Anschlussdichtung 30 kann zumindest abschnittsweise radial nach innen oder außen versetzt zu dem zweiten Rand 100a und/oder ersten Rand 100b (vgl. Fig. 7) der Federplatte 1a, 1b angeordnet sein. Die erste Anschlussdichtung 30 kann in radialer Richtung über den zweiten Rand 100a oder den ersten Rand 100b (vgl. Fig. 7) hinweg herausragen.

Die zweite Anschlussdichtung 20 kann zumindest abschnittsweise radial nach innen oder außen versetzt zu dem zweiten Rand 100a und/oder ersten Rand 100b (vgl. Fig. 7) der Federplatte 1a, 1b angeordnet sein. Die zweite Anschlussdichtung 20 kann in radialer Richtung über den zweiten Rand 100a oder den ersten Rand 100b (vgl. Fig. 7) hinweg herausragen.

Die Federplatte 1a, 1b gemäß Figur 7 kann in dem Gehäuseteil 3a, 3b gemäß Figuren 5B, 6 und 8 eingeklemmt werden. Dabei wird das elastische Element 1a, 1b in der Aussparung 11 derart zwischen dem zweiten Rand 100a (bzw. Klemmelement 8 mit Klemmfläche 7 oder zweite Gehäusekontaktfläche 12b) und dem ersten Rand 100b (oder erste Gehäusekontaktfläche 12a) des Gehäuseteils 3a, 3b eingeklemmt, dass die erste Anschlussdichtung 30 in Kontakt kommt mit dem Bereich des ersten Anschlusses I des Gehäuseteils 3a, 3b zum Beaufschlagen des Gehäuseteils mit einem Druckmedium und die zweite Anschlussdichtung 20 in Kontakt kommt mit dem Bereich des zweiten Anschlusses II des Gehäuseteils 3a, 3b zum Beaufschlagen des Gehäuseteils mit einem Druckmedium (vgl. Fig. 7, 8). Dies wird zweimal durchgeführt, sodass zwei solche Gehäuseteile 3a, 3b mit dort jeweils eingeklemmter Federplatte 1a, 1b hergerichtet werden, die dann miteinander befestigt werden, um ein Gehäuse 3 wie in der Figur 5A gezeigt zu bilden.

Die Nut 110 verläuft auf der ersten Gehäusekontaktfläche 12a und kann ausgelegt sein, das Objekt 5 (vgl. Fig. 5A) zumindest teilweise zu umlaufen. Die Nut 110kann sich zumindest teilweise entlang eines Kreisbogens erstrecken. Der Kreisbogen kann einen Mittelpunktswinkel von mindestens 45°, 90°, 120°, 135°, 160°, 180°, 225°, 270°, 315°, 350°, oder 360° überspannen. In Figur 8 beträgt der Mittelpunktswinkel 360°, weil die Nut 110 einmal vollständig den Mittelpunkt der Öffnung 14 umläuft.

Die Nut 110 kann aber durch ein oder mehrere der Anschlüsse I, II unterbrochen sein und/oder, wie in Fig. 8 gezeigt, kann die Nut 110 auf der ersten Gehäusekontaktfläche 12b zwischen dem ersten Rand 100b des Gehäuseteils 3a, 3b und ein oder mehreren der Anschlüsse I, II verlaufen und diese vorzugsweise zumindest teilweise umlaufen. Diese optionalen Möglichkeiten erhöhen jeweils und in Kombination zusätzlich die Dichtheit, da die Nut 110 bis an die Anschlüsse I, II geführt wird und diese ggf. sogar teilweise derart umläuft, dass das in der Nut 110 befindliche Dichtungsmittel die Anschlüsse I, II gegenüber dem ersten Rand 100b des Gehäuseteils und damit der Umgebung abdichtet. Dies reduziert die Störanfälligkeit durch Reduktion von Leckage im Bereich der Anschlüsse I, II.

In den Figuren 5 bis 8 kann in der Nut (vgl. 110) eines jeden Gehäuseteils 3a, 3b ein Dichtungsmittel (z.B. ein Gummiring, O-Ring aus Gummi) aufgenommen sein. Dabei kann in jedem der Gehäuseteile 3a, 3b ein jeweiliges eigenes Dichtungsmittel (also insgesamt mindestens zwei Dichtungsmittel pro Gehäuse 3 der Klemm- und/oder Bremsvorrichtung 10) vorliegen oder ein einziges Dichtungsmittel kann beim miteinander befestigen der Gehäuseteile 3a, 3b in die Nuten der Gehäuseteile 3a, 3b aufgenommen werden.

Wie schon ausgeführt, zeigen Figuren 5 bis 8 exemplarisch Komponenten der Vorrichtung 10 mit nach Innen gerichteter Klemmkraft gemäß der Figure 1A, 2A, 3A und 4A. Im diesem Fall ist der erste Rand 100b der äußere Rand entlang dem die optionalen Löcher 15 angeordnet sind und der zweite Rand 100a ist der innere Rand, der dem Objekt 5 zugewandt ist. Die zweite Anlagefläche 102 ist dann weiter innen liegend im Vergleich zu der ersten Anlagefläche 101.

Jedoch gilt das für die Vorrichtung in den Figure 5A bis 8 Gezeigte entsprechend für die Vorrichtung 10 mit nach Außen gerichteter Klemmkraft gemäß der Figure 1B, 2B, 3B und 4B. Im letzteren Fall wäre der erste Rand 100b der innerer Rand entlang dem die optionalen Löcher 15 angeordnet sind und der zweite Rand 100a wäre der äußere Rand, der dem Objekt 5 zugewandt ist. Die zweite Anlagefläche 101 ist dann weiter außen liegend im Vergleich zu der ersten Anlagefläche 101.

Durch die hier beschriebenen Mitteln einzeln und in Kombination können Klemmen bereitgestellt werden, die verlässlichen zwischen den Gehäuseteilen und gegenüber der Umgebung abdichten, ohne, dass dadurch die Dynamik des Öffnens und Schließens der Klemme negativ beeinträchtigt wird.

In der Beschreibung und in den Figuren sind bevorzugte Ausführungsformen der durch die beigefügten Ansprüche beanspruchten Gegenstände beschrieben. Die in der vorstehenden Beschreibung, den Ansprüchen und den Zeichnungen offenbarten optionalen Merkmale können sowohl einzeln als auch in beliebiger Kombination für die Ausführung der hier gemäß der beiliegenden Ansprüche beanspruchten Gegenstände in ihren verschiedenen Ausgestaltungen Verwendung finden.

Die verschiedenen oben beschriebenen Aspekte und Ausführungsformen können kombiniert werden, um noch weitere Ausführungsformen zu schaffen. Diese und andere Änderungen können an den Ausführungsformen im Lichte der obigen detaillierten Beschreibung vorgenommen werden. Im Allgemeinen sollten die in den folgenden Ansprüchen verwendeten Begriffe nicht so ausgelegt werden, dass sie die Ansprüche auf die in der Beschreibung und den Ansprüchen offengelegten spezifischen Aspekte und Ausführungsformen beschränken, sondern so, dass sie alle möglichen Ausführungsformen zusammen mit dem vollen Umfang der Äquivalente, auf die diese Ansprüche Anspruch haben, umfassen.

## Patentansprüche

1. Ein Gehäuseteil (3a, 3b) für eine pneumatische Klemm- und/oder Bremsvorrichtung (10), das Gehäuseteil (3a, 3b) umfassend:
einen ersten Rand (100b) des Gehäuseteils (3a, 3b) und einen dem ersten Rand (100b) gegenüberliegenden zweiten Rand (100a) des Gehäuseteils (3a, 3b);
eine zwischen dem zweiten Rand (100a) und dem ersten Rand (100b) angeordnete ringförmige Aussparung (11) zum Einklemmen einer ringförmigen Federplatte (1a, 1b) zwischen einer durch die Aussparung (11) definierten ersten Anlagefläche (101) des Gehäuseteils (3a, 3b) und einer durch die Aussparung (11) definierten zweiten Anlagefläche (102) des Gehäuseteils (3a, 3b);
ein Klemmelement (8) mit einer Klemmfläche (7), die ausgelegt ist, wenn die Federplatte (1a, 1b) derart in der Aussparung (11) zwischen der ersten Anlagefläche (101) und der zweiten Anlagefläche (102) eingeklemmt ist, dass sich ein erstes Ende der Federplatte (1a, 1b) an der ersten Anlagefläche (101) abstützt und ein zweites Ende der Federplatte (1a, 1b) auf die zweite Anlagefläche (102) drückt, eine Klemm- und/oder Bremskraft auf ein zu klemmendes und/oder zu bremsendes Objekt (5) zu übertragen; eine erste Gehäusekontaktfläche (12a), die sich zwischen dem ersten Rand (100b) und der ersten Anlagefläche (101) erstreckt;
wobei auf der ersten Gehäusekontaktfläche (12a) mindestens eine Nut (110) zur Aufnahme eines Dichtungsmittels angeordnet ist,
wobei das Gehäuseteil (3a, 3b) ein, zwei oder mehr Anschlüsse (I, II) zum Beaufschlagen des Gehäuseteils mit einem Druckmedium aufweist,
**dadurch gekennzeichnet, dass**
die mindestens eine Nut (110) durch ein oder mehrere der Anschlüsse (I, II) unterbrochen ist
und/oder
die mindestens eine Nut (110) auf der ersten Gehäusekontaktfläche (12b) zwischen dem ersten Rand (100b) des Gehäuseteils (3a, 3b) und ein oder mehreren der Anschlüsse (I, II) verläuft.

2. Das Gehäuseteil nach Anspruch 1, **dadurch gekennzeichnet, dass** die erste Gehäusekontaktfläche (12a) ferner ein oder mehrere Löcher (15) zum Befestigen des Gehäuseteils (3a) an einem anderen Gehäuseteil (3b) mittels einem Befestigungsmittel (17) aufweist, vorzugsweise: **dadurch gekennzeichnet, dass** sich die mindestens eine Nut (110) auf der ersten Gehäusekontaktfläche (12a) zwischen den Löchern (15) und der ersten Anlagefläche (101) erstreckt, und/oder **dadurch gekennzeichnet, dass** die Löcher (15) auf der ersten Gehäusekontaktfläche (12a) zwischen dem ersten Rand (100b) und der mindestens einen Nut (110) angeordnet sind.

3. Das Gehäuseteil (3a, 3b) nach irgendeinem der vorangehenden Ansprüche, **dadurch gekennzeichnet, dass** die Nut (110) sich zumindest teilweise entlang eines Kreisbogens erstreckt und/oder die mindestens eine Nut (110) ausgelegt ist, einen Mittelpunkt der ringförmigen Aussparung (11) zumindest teilweise zu umlaufen, vorzugsweise **dadurch gekennzeichnet, dass** der Kreisbogen einen Mittelpunktswinkel von mindestens 45°, 90°, 120°, 135°, 160°, 180°, 225°, 270°, 315°, 350°, oder 360° überspannt.

4. Das Gehäuseteil nach irgendeinem der vorangehenden Ansprüche, **dadurch gekennzeichnet, dass** die Nut eine Breite (B) von 1 mm bis 2 mm, vorzugsweise von 1,4 mm bis 1,6 mm, und/oder eine Tiefe (T) von 0,5 mm bis 1,0 mm, vorzugsweise von 0,65 mm bis 0, 75 mm, aufweist

5. Das Gehäuseteil nach irgendeinem der vorangehenden Ansprüche, **dadurch gekennzeichnet, dass** die mindestens eine Nut (110), die auf der ersten Gehäusekontaktfläche (12b) zwischen dem ersten Rand (100b) des Gehäuseteils (3a, 3b) und den ein oder mehreren der Anschlüssen (I, II) verläuft, diese ein oder mehreren Anschlüsse (I, II) zumindest teilweise umläuft.

6. Das Gehäuseteil (3a, 3b) nach irgendeinem der vorangehenden Ansprüche, **dadurch gekennzeichnet, dass** das Gehäuseteil (3a, 3b) derart ausgelegt ist, dass, wenn das zweite Ende der Federplatte (1a, 1b) auf die zweite Anlagefläche (102) drückt, sich das Gehäuseteil (3a, 3b) im Bereich des Klemmelements und/oder der zweiten Anlagefläche (102) elastisch verformt und dadurch die Klemmfläche (7) die Klemm- und/oder Bremskraft auf das zu klemmende und/oder zu bremsende Objekt (5) überträgt.

7. Das Gehäuseteil (3a, 3b) nach irgendeinem der vorangehenden Ansprüche, **dadurch gekennzeichnet, dass** das Gehäuseteil (3a, 3b) ferner umfasst: eine zweite Gehäusekontaktfläche (12b), die sich zwischen der zweite Anlagefläche (102) und dem zweiten Rand (100b) des Gehäuseteils (3a, 3b) erstreckt, vorzugsweise **dadurch gekennzeichnet, dass** die ringförmige Aussparung (11) eine ringförmige Öffnung (12) zur Einführung der Federplatte (1a, 1b) in das Gehäuseteil (3a, 3b) definiert, wobei die ringförmige Öffnung (12) zwischen der ersten Gehäusekontaktfläche (12a) und der zweiten Gehäusekontaktfläche (12b) gebildet ist.

8. Das Gehäuseteil (3a, 3b) nach irgendeinem der vorangehenden Ansprüche, **dadurch gekennzeichnet, dass** die zweite Anlagefläche (102) und die Klemmfläche (7) aufeinander gegenüberliegenden Seitenflächen des Klemmelements (8), vorzugsweise mit dazwischen angeordneter zweiten Gehäusekontaktfläche (12b), angeordnet sind, und/oder die Klemmfläche (7) an oder auf dem zweiten Rand (100a) angeordnet ist.

9. Das Gehäuseteil (3a, 3b) nach irgendeinem der vorangehenden Ansprüche, **dadurch gekennzeichnet, dass** der Abstand der zweiten Anlagefläche (102) zu dem zweiten Rand (100a) oder der Klemmfläche (7) kleiner ist als der Abstand der ersten Anlagefläche (101) zu dem zweiten Rand (100a) oder der Klemmfläche (7), und/oder der Abstand der ersten Anlagefläche (101) zu dem ersten Rand (100b) kleiner ist als der Abstand der zweiten Anlagefläche (102) zu dem ersten Rand (100b) und/oder der zweite Rand (100a) des Gehäuseteils (3a, 3b) im in der Klemm- und/oder Bremsvorrichtung eingebauten Zustand näher an dem Objekt (5) ist als der erste Rand (100b) und/oder die zweite Gehäusekontaktfläche (12b) des Gehäuseteils (3a, 3b) im in der Klemm- und/oder Bremsvorrichtung eingebauten Zustand näher an dem Objekt (5) ist als die erste Gehäusekontaktfläche (12a).

10. Eine Klemm- und/oder Bremsvorrichtung (10) zum Klemmen und/oder Bremsen eines zu klemmenden und/oder bremsenden Objekts (5), umfassend:
ein Gehäuse (3) umfassend ein erstes Gehäuseteil (3a) nach irgendeinem der vorangehenden Ansprüche und ein zweites Gehäuseteil (3b) nach irgendeinem der vorangehenden Ansprüche,
wobei die beiden Gehäuseteile (3a, 3b) derart zueinander angeordnet und miteinander befestigt sind, dass die erste Gehäusekontaktfläche (12a) des ersten Gehäuseteils (3a) der ersten Gehäusekontaktfläche (12a) des zweiten Gehäuseteils (3b) zugewandt ist, und dass die Aussparungen (11) der ersten und zweiten Gehäuseteile (3a, 3b) zusammen einen Innenraum (13) innerhalb des Gehäuses (3) bilden;
wobei in der jeweiligen Nut (110) eines jeden der Gehäuseteile (3a, 3b) ein Dichtungsmittel aufgenommen ist;
eine in dem Innenraum (13) angeordnete Feder (1) umfassend eine erste ringförmige Federplatte (1a) und eine zweite ringförmige Federplatte (1b), wobei die Federplatten (1a, 1b) derart innerhalb des Innenraums (13) angeordnet sind, dass in dem Innenraum (13) mindestens ein Druckraum (2, 4) gebildet wird, der zumindest teilweise durch die Federplatten (1a, 1b) begrenzt wird, wobei der Druckraum (2, 4) be- oder entlüftbar ist und mit Überdruck eines dem Gehäuse (3) zuführbaren Druckmediums beaufschlagbar ist,
wobei die erste Federplatte (1a) zwischen der ersten Anlagefläche (101) des ersten Gehäuseteils (3a) und der zweiten Anlagefläche (102) des ersten Gehäuseteils (3a) eingeklemmt ist;
wobei die zweite Federplatte (1b) zwischen der ersten Anlagefläche (101) des zweiten Gehäuseteils (3b) und der zweiten Anlagefläche (102) des zweiten Gehäuseteils (3b) eingeklemmt ist; und
wobei die Federplatten (1a, 1b) derart relativ zu den mindestens einen Druckraum (2, 4) angeordnet sind, dass durch Be- oder Entlüften des Druckraums (2, 4) oder Beaufschlagung des Druckraum (2, 4) mit Überdruck, eine Biegung mindestens einer der Federplatten (1a, 1b) veränderbar ist und dadurch die Vorrichtung (10) zwischen einem geöffneten Zustand, in dem das Objekt (5) von den Klemmflächen (7) beabstandet ist, und einem geschlossenen Zustand, in dem ein oder mehrere der Klemmflächen (7) eine Klemm- und/oder Bremskraft auf das Objekt (5) übertragen, wechselt.

11. Eine Klemm- und/oder Bremsvorrichtung (10) zum Klemmen und/oder Bremsen eines zu klemmenden und/oder bremsenden Objekts (5), umfassend:
ein Gehäuse (3) umfassend ein erstes Gehäuseteil (3a) und ein zweites Gehäuseteil (3b),
wobei jedes der Gehäuseteile (3a, 3b) umfasst:
einen ersten Rand (100b) des Gehäuseteils (3a, 3b) und einen dem ersten Rand (100b) gegenüberliegenden zweiten Rand (100a) des Gehäuseteils (3a, 3b);
eine zwischen dem zweiten Rand (100a) und dem ersten Rand (100b) angeordnete ringförmige Aussparung (11) zum Einklemmen einer ringförmigen Federplatte (1a, 1b) zwischen einer durch die Aussparung (11) definierten ersten Anlagefläche (101) des Gehäuseteils (3a, 3b) und einer durch die Aussparung (11) definierten zweiten Anlagefläche (102) des Gehäuseteils (3a, 3b);
ein Klemmelement (8) mit einer Klemmfläche (7), die ausgelegt ist, wenn die Federplatte (1a, 1b) derart in der Aussparung (11) zwischen der ersten Anlagefläche (101) und der zweiten Anlagefläche (102) eingeklemmt ist, dass sich ein erstes Ende der Federplatte (1a, 1b) an der ersten Anlagefläche (101) abstützt und ein zweites Ende der Federplatte (1a, 1b) auf die zweite Anlagefläche (102) drückt, eine Klemm- und/oder Bremskraft auf ein zu klemmendes und/oder zu bremsendes Objekt (5) zu übertragen;
eine erste Gehäusekontaktfläche (12a), die sich zwischen dem ersten Rand (100b) und der ersten Anlagefläche (101) erstreckt,
wobei auf der ersten Gehäusekontaktfläche (12a) mindestens eine Nut (110) angeordnet ist, in der ein Dichtungsmittel aufgenommen ist,
und
wobei die beiden Gehäuseteile (3a, 3b) derart zueinander angeordnet und miteinander befestigt sind, dass die erste Gehäusekontaktfläche (12a) des ersten Gehäuseteils (3a) der ersten Gehäusekontaktfläche (12a) des zweiten Gehäuseteils (3b) zugewandt ist, und dass die Aussparungen (11) der ersten und zweiten Gehäuseteile (3a, 3b) zusammen einen Innenraum (13) innerhalb des Gehäuses (3) bilden;
eine in dem Innenraum (13) angeordnete Feder (1) umfassend eine erste ringförmige Federplatte (1a) und eine zweite ringförmige Federplatte (1b), wobei die Federplatten (1a, 1b) derart innerhalb des Innenraums (13) angeordnet sind, dass in dem Innenraum (13) mindestens ein Druckraum (2, 4) gebildet wird, der zumindest teilweise durch die Federplatten (1a, 1b) begrenzt wird, wobei der Druckraum (2, 4) be- oder entlüftbar ist und mit Überdruck eines dem Gehäuse (3) zuführbaren Druckmediums beaufschlagbar ist,
wobei die erste Federplatte (1a) zwischen der ersten Anlagefläche (101) des ersten Gehäuseteils (3a) und der zweiten Anlagefläche (102) des ersten Gehäuseteils (3a) eingeklemmt ist;
wobei die zweite Federplatte (1b) zwischen der ersten Anlagefläche (101) des zweiten Gehäuseteils (3b) und der zweiten Anlagefläche (102) des zweiten Gehäuseteils (3b) eingeklemmt ist; und
wobei die Federplatten (1a, 1b) derart relativ zu den mindestens einen Druckraum (2, 4) angeordnet sind, dass durch Be- oder Entlüften des Druckraums (2, 4) oder Beaufschlagung des Druckraum (2, 4) mit Überdruck, eine Biegung mindestens einer der Federplatten (1a, 1b) veränderbar ist und dadurch die Vorrichtung (10) zwischen einem geöffneten Zustand, in dem das Objekt (5) von den Klemmflächen (7) beabstandet ist, und einem geschlossenen Zustand, in dem ein oder mehrere der Klemmflächen (7) eine Klemm- und/oder Bremskraft auf das Objekt (5) übertragen, wechselt.

12. Die Klemm- und/oder Bremsvorrichtung (10) nach Anspruch 10 oder 11, wobei die beiden Gehäuseteile (3a, 3b) mittels in den Löchern (15) angeordneter ein oder mehrerer Befestigungsmittel (17) miteinander befestigt sind.

13. Die Klemm- und/oder Bremsvorrichtung (10) nach irgendeinem der Ansprüche 10 bis 12, wobei die zweite Gehäusekontaktfläche (12b) des ersten Gehäuseteils (3a) der zweiten Gehäusekontaktfläche (12b) des zweiten Gehäuseteils (3b) zugewandt ist.

14. Die Klemm- und/oder Bremsvorrichtung (10) nach irgendeinem der vorangehenden Ansprüche 10 bis 13, wobei der mindestens eine Druckraum einen ersten Druckraum (4) umfasst, der außerhalb der Feder (1) zwischen mindestens einer der Federplatten (1a, 1b) und dem Gehäuse (3) angeordnet ist, vorzugsweise: wobei die erste Federplatte (1a) ausgelegt ist, durch das Belüften des ersten Druckraums (4) oder durch das Beaufschlagen des ersten Druckraum (4) mit Überdruck, ihre Biegung zu reduzieren um, bei Aufstützen des ersten Endes der ersten Federplatte (1a) an der ersten Anlagefläche (101) des ersten Gehäuseteils (3a), mit dem zweiten Ende der ersten Federplatte (1a) auf die zweite Anlagefläche (102) des ersten Gehäuseteils (3a) derart zu drücken, dass dadurch eine Übertragung einer Klemm- und/oder Bremskraft von der Klemmfläche (7) des Klemmelements (8) des ersten Gehäuseteils (3a) auf das zu klemmende und/oder bremsende Objekt (5) bewirkt wird und die Vorrichtung (10) von dem geöffneten Zustand in den geschlossenen Zustand wechselt, und/oder wobei die zweite Federplatte (1b) ausgelegt ist, durch das Belüften des ersten Druckraums (4) oder durch das Beaufschlagen des ersten Druckraum (2, 4) mit Überdruck, ihre Biegung zu reduzieren um, bei Aufstützen des ersten Endes der zweiten Federplatte (1b) an der ersten Anlagefläche (101) des zweiten Gehäuseteils (3b), mit dem zweiten Ende der zweiten Federplatte (1b) auf die zweite Anlagefläche (102) des zweiten Gehäuseteils (3a) derart zu drücken, dass dadurch eine Übertragung einer Klemm- und/oder Bremskraft von der Klemmfläche (7) des Klemmelements (8) des zweiten Gehäuseteils (3a) auf das zu klemmende und/oder bremsende Objekt (5) bewirkt wird und die Vorrichtung (10) von dem geöffneten Zustand in den geschlossenen Zustand wechselt, und/oder wobei die Vorrichtung (10) derart ausgelegt ist, dass durch das Belüften des ersten Druckraums (4) oder durch das Beaufschlagendes ersten Druckraums (4) mit Überdruck, sich die erste Anlagefläche (101) und die zweite Anlagefläche (102) zumindest einer der beiden Gehäuseteile (3a, 3b) voneinander wegbewegen und/oder sich die Biegung mindestens einer der Federplatten (1a, 1b) verringert, und dadurch die Vorrichtung (10) von dem geöffneten Zustand in den geschlossenen Zustand wechselt.

15. Die Klemm- und/oder Bremsvorrichtung (10) nach irgendeinem der Ansprüche 10 bis 14, wobei der mindestens eine Druckraum einen zweiten Druckraum (2) umfasst, wobei der zweite Druckraum (2) innerhalb der Feder (1) zwischen den beiden Federplatten (1a, 1b) angeordnet ist, vorzugsweise wobei die Vorrichtung (10) derart ausgelegt ist, dass durch das Belüften des zweiten Druckraums (2) oder durch das Beaufschlagen des zweiten Druckraums (2) mit Überdruck, sich die erste Anlagefläche (101) und die zweite Anlagefläche (102) zumindest einer der beiden Gehäuseteile (3a, 3b) aufeinander zu bewegen und/oder sich die Biegung mindestens einer der Federplatten (1a, 1b) vergrößert, und dadurch die Vorrichtung (10) von dem geschlossenen Zustand in den geöffneten Zustand wechselt.

## Claims

1. Housing part (3a, 3b) for a pneumatic clamping and/or braking device (10), the housing part (3a, 3b) comprising:
a first edge (100b) of the housing part (3a, 3b) and a second edge (100a) of the housing part (3a, 3b) opposite the first edge (100b);
an annular recess (11) arranged between the second edge (100a) and the first edge (100b) for clamping an annular spring plate (1a, 1b) between a first bearing surface (101) of the housing part (3a, 3b) defined by the recess (11) and a second bearing surface (102) of the housing part (3a, 3b) defined by the recess (11);
a clamping element (8) having a clamping surface (7) which is designed, when the spring plate (1a, 1b) is clamped in the recess (11) between the first bearing surface (101) and the second bearing surface (102) in such a way that a first end of the spring plate (1a, 1b) is supported on the first bearing surface (101) and a second end of the spring plate (1a, 1b) presses onto the second bearing surface (102), to transmit a clamping and/or braking force to an object (5) to be clamped and/or braked;
a first housing contact surface (12a) which extends between the first edge (100b) and the first bearing surface (101);
wherein at least one groove (110) for receiving a sealing means is arranged on the first housing contact surface (12a),
wherein the housing part (3a, 3b) has one, two or more ports (I, II) for applying a pressure medium to the housing part,
**characterized in that**
the at least one groove (110) is interrupted by one or more of the ports (I, II)
and/or
the at least one groove (110) on the first housing contact surface (12b) runs between the first edge (100b) of the housing part (3a, 3b) and one or more of the ports (I, II).

2. The housing part according to Claim 1, **characterized in that** the first housing contact surface (12a) furthermore has one or more holes (15) for fastening the housing part (3a) to another housing part (3b) by means of a fastening means (17), preferably **characterized in that** the at least one groove (110) on the first housing contact surface (12a) extends between the holes (15) and the first bearing surface (101), and/or **characterized in that** the holes (15) on the first housing contact surface (12a) are arranged between the first edge (100b) and the at least one groove (110).

3. The housing part (3a, 3b) according to any one of the preceding claims, **characterized in that** the groove (110) extends at least partially along an arc of a circle and/or the at least one groove (110) is designed to run at least partially around a centre point of the annular recess (11), preferably
**characterized in that** the arc of a circle spans a centre angle of at least 45°, 90°, 120°, 135°, 160°, 180°, 225°, 270°, 315°, 350°, or 360°.

4. The housing part according to any one of the preceding claims, **characterized in that** the groove has a width (B) of 1 mm to 2 mm, preferably of 1.4 mm to 1.6 mm, and/or a depth (T) of 0.5 mm to 1.0 mm, preferably of 0.65 mm to 0.75 mm.

5. The housing part according to any one of the preceding claims, **characterized in that** the at least one groove (110), which runs on the first housing contact surface (12b) between the first edge (100b) of the housing part (3a, 3b) and one or more of the ports (I, II), runs at least partially around the ports.

6. The housing part (3a, 3b) according to any one of the preceding claims, **characterized in that** the housing part (3a, 3b) is designed in such a way that, when the second end of the spring plate (1a, 1b) presses onto the second bearing surface (102), the housing part (3a, 3b) elastically deforms in the region of the clamping element and/or the second bearing surface (102) and thereby the clamping surface (7) transmits the clamping and/or braking force to the object (5) to be clamped and/or braked.

7. The housing part (3a, 3b) according to any one of the preceding claims, **characterized in that** the housing part (3a, 3b) furthermore comprises: a second housing contact surface (12b) which extends between the second bearing surface (102) and the second edge (100b) of the housing part (3a, 3b), preferably
**characterized in that** the annular recess (11) defines an annular opening (12) for inserting the spring plate (1a, 1b) into the housing part (3a, 3b), wherein the annular opening (12) is formed between the first housing contact surface (12a) and the second housing contact surface (12b).

8. The housing part (3a, 3b) according to any one of the preceding claims, **characterized in that** the second bearing surface (102) and the clamping surface (7) are arranged on mutually opposite side surfaces of the clamping element (8), preferably with a second housing contact surface (12b) arranged therebetween, and/or the clamping surface (7) is arranged at or on the second edge (100a).

9. The housing part (3a, 3b) according to any one of the preceding claims, **characterized in that** the distance of the second bearing surface (102) from the second edge (100a) or the clamping surface (7) is smaller than the distance of the first bearing surface (101) from the second edge (100a) or the clamping surface (7), and/or the distance of the first bearing surface (101) from the first edge (100b) is smaller than the distance of the second bearing surface (102) from the first edge (100b) and/or the second edge (100a) of the housing part (3a, 3b) is closer to the object (5) than the first edge (100b) in the state installed in the clamping and/or braking device and/or the second housing contact surface (12b) of the housing part (3a, 3b) is closer to the object (5) than the first housing contact surface (12a) in the state installed in the clamping and/or braking device.

10. Clamping and/or braking device (10) for clamping and/or braking an object (5) to be clamped and/or braked, comprising:
a housing (3) comprising a first housing part (3a) according to any one of the preceding claims and a second housing part (3b) according to any one of the preceding claims,
wherein the two housing parts (3a, 3b) are arranged with respect to one another and fastened to one another in such a way that the first housing contact surface (12a) of the first housing part (3a) faces the first housing contact surface (12a) of the second housing part (3b), and that the recesses (11) of the first and second housing parts (3a, 3b) together form an interior space (13) within the housing (3);
wherein a sealing means is received in the respective groove (110) of each of the housing parts (3a, 3b);
a spring (1) which is arranged in the interior space (13) and comprises a first annular spring plate (1a) and a second annular spring plate (1b), wherein the spring plates (1a, 1b) are arranged within the interior space (13) in such a way that at least one pressure space (2, 4) is formed in the interior space (13), which pressure space is at least partially delimited by the spring plates (1a, 1b), wherein the pressure space (2, 4) can be aerated or deaerated and can be subjected to overpressure of a pressure medium which is suppliable to the housing (3),
wherein the first spring plate (1a) is clamped between the first bearing surface (101) of the first housing part (3a) and the second bearing surface (102) of the first housing part (3a);
wherein the second spring plate (1b) is clamped between the first bearing surface (101) of the second housing part (3b) and the second bearing surface (102) of the second housing part (3b); and
wherein the spring plates (1a, 1b) are arranged relative to the at least one pressure space (2, 4) in such a way that a bending of at least one of the spring plates (1a, 1b) is changeable by aerating or deaerating the pressure space (2, 4) or subjecting the pressure space (2, 4) to overpressure, and as a result the device (10) changes between an open state, in which the object (5) is spaced apart from the clamping surfaces (7), and a closed state, in which one or more of the clamping surfaces (7) transmit a clamping and/or braking force to the object (5).

11. Clamping and/or braking device (10) for clamping and/or braking an object (5) to be clamped and/or braked, comprising:
a housing (3) comprising a first housing part (3a) and a second housing part (3b),
wherein each of the housing parts (3a, 3b) comprises:
a first edge (100b) of the housing part (3a, 3b) and a second edge (100a) of the housing part (3a, 3b) opposite the first edge (1oob);
an annular recess (11) arranged between the second edge (100a) and the first edge (100b) for clamping an annular spring plate (1a, 1b) between a first bearing surface (101) of the housing part (3a, 3b) defined by the recess (11) and a second bearing surface (102) of the housing part (3a, 3b) defined by the recess (11);
a clamping element (8) having a clamping surface (7) which is designed, when the spring plate (1a, 1b) is clamped in the recess (11) between the first bearing surface (101) and the second bearing surface (102) in such a way that a first end of the spring plate (1a, 1b) is supported on the first bearing surface (101) and a second end of the spring plate (1a, 1b) presses onto the second bearing surface (102), to transmit a clamping and/or braking force to an object (5) to be clamped and/or braked;
a first housing contact surface (12a) which extends between the first edge (100b) and the first bearing surface (101),
wherein at least one groove (110), in which a sealing means is received, is arranged on the first housing contact surface (12a),
and
wherein the two housing parts (3a, 3b) are arranged with respect to one another and fastened to one another in such a way that the first housing contact surface (12a) of the first housing part (3a) faces the first housing contact surface (12a) of the second housing part (3b), and that the recesses (11) of the first and second housing parts (3a, 3b) together form an interior space (13) within the housing (3);
a spring (1) which is arranged in the interior space (13) and comprises a first annular spring plate (1a) and a second annular spring plate (1b), wherein the spring plates (1a, 1b) are arranged within the interior space (13) in such a way that at least one pressure space (2, 4) is formed in the interior space (13), which pressure space is at least partially delimited by the spring plates (1a, 1b), wherein the pressure space (2, 4) can be aerated or deaerated and can be subjected to overpressure of a pressure medium which is suppliable to the housing (3),
wherein the first spring plate (1a) is clamped between the first bearing surface (101) of the first housing part (3a) and the second bearing surface (102) of the first housing part (3a);
wherein the second spring plate (1b) is clamped between the first bearing surface (101) of the second housing part (3b) and the second bearing surface (102) of the second housing part (3b); and
wherein the spring plates (1a, 1b) are arranged relative to the at least one pressure space (2, 4) in such a way that a bending of at least one of the spring plates (1a, 1b) is changeable by aerating or deaerating the pressure space (2, 4) or subjecting the pressure space (2, 4) to overpressure, and as a result the device (10) changes between an open state, in which the object (5) is spaced apart from the clamping surfaces (7), and a closed state, in which one or more of the clamping surfaces (7) transmit a clamping and/or braking force to the object (5).

12. The clamping and/or braking device (10) according to Claim 10 or 11, wherein the two housing parts (3a, 3b) are fastened to one another by means of one or more fastening means (17) which are arranged in the holes (15).

13. The clamping and/or braking device (10) according to any one of Claims 10 to 12, wherein the second housing contact surface (12b) of the first housing part (3a) faces the second housing contact surface (12b) of the second housing part (3b).

14. The clamping and/or braking device (10) according to any one of the preceding Claims 10-13, wherein the at least one pressure space comprises a first pressure space (4) which is arranged outside the spring (1) between at least one of the spring plates (1a, 1b) and the housing (3), preferably
wherein the first spring plate (1a) is designed to reduce its bending by aerating the first pressure space (4) or by subjecting the first pressure space (4) to overpressure in order, when the first end of the first spring plate (1a) is supported on the first bearing surface (101) of the first housing part (3a), to press with the second end of the first spring plate (1a) onto the second bearing surface (102) of the first housing part (3a) in such a way that as a result a transmission of a clamping and/or braking force from the clamping surface (7) of the clamping element (8) of the first housing part (3a) to the object (5) to be clamped and/or braked is brought about and the device (10) changes from the open state to the closed state, and/or
wherein the second spring plate (1b) is designed to reduce its bending by aerating the first pressure space (4) or by subjecting the first pressure space (2, 4) to overpressure in order, when the first end of the second spring plate (1b) is supported on the first bearing surface (101) of the second housing part (3b), to press with the second end of the second spring plate (1b) onto the second bearing surface (102) of the second housing part (3a) in such a way that as a result a transmission of a clamping and/or braking force from the clamping surface (7) of the clamping element (8) of the second housing part (3a) to the object (5) to be clamped and/or braked is brought about and the device (10) changes from the open state to the closed state, and/or
wherein the device (10) is designed in such a way that, by aerating the first pressure space (4) or by subjecting the first pressure space (4) to overpressure, the first bearing surface (101) and the second bearing surface (102) of at least one of the two housing parts (3a, 3b) move away from one another and/or the bending of at least one of the spring plates (1a, 1b) decreases, and as a result the device (10) changes from the open state to the closed state.

15. The clamping and/or braking device (10) according to any one of Claims 10 to 14, wherein the at least one pressure space comprises a second pressure space (2), wherein the second pressure space (2) is arranged within the spring (1) between the two spring plates (1a, 1b), preferably wherein the device (10) is designed in such a way that, by aerating the second pressure space (2) or by subjecting the second pressure space (2) to overpressure, the first bearing surface (101) and the second bearing surface (102) of at least one of the two housing parts (3a, 3b) move towards one another and/or the bending of at least one of the spring plates (1a, 1b) increases, and as a result the device (10) changes from the closed state to the open state.

## Revendications

1. Un élément de boîtier (3a, 3b) pour un dispositif de serrage et/ou de freinage pneumatique (10), l'élément de boîtier (3a, 3b) comprenant :
un premier bord (100b) de l'élément de boîtier (3a, 3b) et un deuxième bord (100a) de l'élément de boîtier (3a, 3b) opposé au premier bord (100b) ;
une évidement annulaire (11) disposée entre le deuxième bord (100a) et le premier bord (100b) pour coincer une plaque-ressort annulaire (1a, 1b) entre une première surface d'appui (101) de l'élément de boîtier (3a, 3b) définie par l'évidement annulaire (11) et une deuxième surface d'appui (102) de l'élément de boîtier (3a, 3b) définie par l'évidement annulaire (11) ;
un élément de serrage (8) avec une surface de serrage (7), qui est conçue, lorsque la plaque-ressort (1a, 1b) est ainsi coincée dans l'évidement annulaire (11) entre la première surface d'appui (101) et la deuxième surface d'appui (102), de sorte qu'une première extrémité de la plaque-ressort (1a, 1b) s'appuie sur la première surface d'appui (101) et une deuxième extrémité de la plaque-ressort (1a, 1b) appuie sur la deuxième surface d'appui (102), pour transmettre une force de serrage et/ou de freinage à un objet (5) à serrer et/ou à freiner ;
une première surface de contact du boîtier (12a), qui s'étend entre le premier bord (100b) et la première surface d'appui (101) ;
où sur la première surface de contact du boîtier (12a) au moins une rainure (110) pour recevoir un agent d'étanchéité est disposée,
où l'élément de boîtier (3a, 3b) présente un, deux ou plusieurs raccords (I, II) pour appliquer un fluide sous pression à l'élément de boîtier,
**caractérisé en ce que** au moins une rainure (110) est interrompue par un ou plusieurs des raccords (I, II)
et/ou
au moins une rainure (110) s'étend sur la première surface de contact du boîtier (12b) entre le premier bord (100b) de l'élément de boîtier (3a, 3b) et un ou plusieurs des raccords (I, II).

2. L'élément de boîtier selon la revendication 1, **caractérisé en ce que** la première surface de contact du boîtier (12a) présente en outre un ou plusieurs trous (15) pour fixer l'élément de boîtier (3a) à un autre élément de boîtier (3b) au moyen d'un moyen de fixation (17), de préférence : **caractérisé en ce que** la au moins une rainure (110) s'étend sur la première surface de contact du boîtier (12a) entre les trous (15) et la première surface d'appui (101), et/ou **caractérisé en ce que** les trous (15) sont disposés sur la première surface de contact du boîtier (12a) entre le premier bord (100b) et la au moins une rainure (110).

3. L'élément de boîtier (3a, 3b) selon l'une quelconque des revendications précédentes, **caractérisé en ce que** la rainure (110) s'étend au moins partiellement le long d'un arc de cercle et/ou la au moins une rainure (110) est conçue pour entourer au moins partiellement un centre de l'évidement annulaire (11), de préférence **caractérisé en ce que** l'arc de cercle couvre un angle au centre d'au moins 45°, 90°, 120°, 135°, 160°, 180°, 225°, 270°, 315°, 350° ou 360°.

4. L'élément de boîtier selon l'une quelconque des revendications précédentes, **caractérisé en ce que** la rainure présente une largeur (B) de 1 mm à 2 mm, de préférence de 1,4 mm à 1,6 mm, et/ou une profondeur (T) de 0,5 mm à 1,0 mm, de préférence de 0,65 mm à 0,75 mm.

5. L'élément de boîtier selon l'une quelconque des revendications précédentes, **caractérisé en ce que** la au moins une rainure (110), qui s'étend sur la première surface de contact du boîtier (12b) entre le premier bord (100b) de l'élément de boîtier (3a, 3b) et un ou plusieurs des raccords (I, II), entoure au moins partiellement ces un ou plusieurs raccords (I, II).

6. L'élément de boîtier (3a, 3b) selon l'une quelconque des revendications précédentes, **caractérisé en ce que** l'élément de boîtier (3a, 3b) est conçu de telle sorte que, lorsque la deuxième extrémité de la plaque-ressort (1a, 1b) appuie sur la deuxième surface d'appui (102), l'élément de boîtier (3a, 3b) se déforme élastiquement dans la zone de l'élément de serrage et/ou de la deuxième surface d'appui (102) et que la surface de serrage (7) transmet ainsi la force de serrage et/ou de freinage à l'objet (5) à serrer et/ou à freiner.

7. L'élément de boîtier (3a, 3b) selon l'une quelconque des revendications précédentes, **caractérisé en ce que** l'élément de boîtier (3a, 3b) comprend en outre : une deuxième surface de contact du boîtier (12b), qui s'étend entre la deuxième surface d'appui (102) et le deuxième bord (100b) de l'élément de boîtier (3a, 3b), de préférence **caractérisé en ce que** l'évidement annulaire (11) définit une ouverture annulaire (12) pour l'introduction de la plaque-ressort (1a, 1b) dans l'élément de boîtier (3a, 3b), l'ouverture annulaire (12) étant formée entre la première surface de contact du boîtier (12a) et la deuxième surface de contact du boîtier (12b).

8. L'élément de boîtier (3a, 3b) selon l'une quelconque des revendications précédentes, **caractérisé en ce que** la deuxième surface d'appui (102) et la surface de serrage (7) sont disposées sur des surfaces latérales opposées de l'élément de serrage (8), de préférence avec la deuxième surface de contact du boîtier (12b) disposée entre elles, et/ou la surface de serrage (7) est disposée sur ou au niveau du deuxième bord (100a).

9. L'élément de boîtier (3a, 3b) selon l'une quelconque des revendications précédentes, **caractérisé en ce que** la distance de la deuxième surface d'appui (102) au deuxième bord (100a) ou à la surface de serrage (7) est inférieure à la distance de la première surface d'appui (101) au deuxième bord (100a) ou à la surface de serrage (7), et/ou la distance de la première surface d'appui (101) au premier bord (100b) est inférieure à la distance de la deuxième surface d'appui (102) au premier bord (100b) et/ou le deuxième bord (100a) de l'élément de boîtier (3a, 3b) est, dans l'état monté dans le dispositif de serrage et/ou de freinage pneumatique, plus proche de l'objet (5) que le premier bord (100b) et/ou la deuxième surface de contact du boîtier (12b) de l'élément de boîtier (3a, 3b) est, dans l'état monté dans le dispositif de serrage et/ou de freinage pneumatique, plus proche de l'objet (5) que la première surface de contact du boîtier (12a).

10. Un dispositif de serrage et/ou de freinage pneumatique (10) pour serrer et/ou freiner un objet (5) à serrer et/ou à freiner, comprenant :
un boîtier (3) comprenant un premier élément de boîtier (3a) selon l'une quelconque des revendications précédentes et un deuxième élément de boîtier (3b) selon l'une quelconque des revendications précédentes,
où les deux éléments de boîtier (3a, 3b) sont disposés l'un par rapport à l'autre et fixés ensemble de telle sorte que la première surface de contact du boîtier (12a) du premier élément de boîtier (3a) est orientée vers la première surface de contact du boîtier (12a) du deuxième élément de boîtier (3b), et que les évidements annulaires (11) des premier et deuxième éléments de boîtier (3a, 3b) forment ensemble un espace intérieur (13) à l'intérieur du boîtier (3) ;
où un agent d'étanchéité est reçu dans la rainure respective (110) de chacun des éléments de boîtier (3a, 3b) ;
un ressort (1) disposé dans l'espace intérieur (13) comprenant une première plaque-ressort annulaire (1a) et une deuxième plaque-ressort annulaire (1b), les plaques-ressort (1a, 1b) étant disposées dans l'espace intérieur (13) de telle sorte qu'au moins une chambre de pression (2, 4) est formée dans l'espace intérieur (13), laquelle est délimitée au moins partiellement par les plaques-ressort (1a, 1b), la chambre de pression (2, 4) pouvant être mise sous pression ou dépressurisée et pouvant être appliquée avec surpression d'un fluide sous pression pouvant être introduit dans le boîtier (3),
où la première plaque-ressort (1a) est coincée entre la première surface d'appui (101) du premier élément de boîtier (3a) et la deuxième surface d'appui (102) du premier élément de boîtier (3a) ;
où la deuxième plaque-ressort (1b) est coincée entre la première surface d'appui (101) du deuxième élément de boîtier (3b) et la deuxième surface d'appui (102) du deuxième élément de boîtier (3b) ; et
où les plaques-ressort (1a, 1b) sont disposées relativement à la au moins une chambre de pression (2, 4) de telle sorte que, par mise sous pression ou dépressurisation de la chambre de pression (2, 4) ou application de la chambre de pression (2, 4) avec surpression, une flexion d'au moins une des plaques-ressort (1a, 1b) peut être modifiée et que le dispositif (10) passe ainsi d'un état ouvert, dans lequel l'objet (5) est à distance des surfaces de serrage (7), à un état fermé, dans lequel une ou plusieurs des surfaces de serrage (7) transmettent une force de serrage et/ou de freinage à l'objet (5).

11. Un dispositif de serrage et/ou de freinage pneumatique (10) pour serrer et/ou freiner un objet (5) à serrer et/ou à freiner, comprenant :
un boîtier (3) comprenant un premier élément de boîtier (3a) et un deuxième élément de boîtier (3b),
où chacun des éléments de boîtier (3a, 3b) comprend :
un premier bord (100b) de l'élément de boîtier (3a, 3b) et un deuxième bord (100a) de l'élément de boîtier (3a, 3b) opposé au premier bord (100b) ;
une évidement annulaire (11) disposée entre le deuxième bord (100a) et le premier bord (100b) pour coincer une plaque-ressort annulaire (1a, 1b) entre une première surface d'appui (101) de l'élément de boîtier (3a, 3b) définie par l'évidement annulaire (11) et
une deuxième surface d'appui (102) de l'élément de boîtier (3a, 3b) définie par l'évidement annulaire (11) ;
un élément de serrage (8) avec une surface de serrage (7), qui est conçue, lorsque la plaque-ressort (1a, 1b) est ainsi coincée dans l'évidement annulaire (11) entre la première surface d'appui (101) et la deuxième surface d'appui (102), de sorte qu'une première extrémité de la plaque-ressort (1a, 1b) s'appuie sur la première surface d'appui (101) et une deuxième extrémité de la plaque-ressort (1a, 1b) appuie sur la deuxième surface d'appui (102), pour transmettre une force de serrage et/ou de freinage à un objet (5) à serrer et/ou à freiner ;
une première surface de contact du boîtier (12a), qui s'étend entre le premier bord (100b) et la première surface d'appui (101),
où sur la première surface de contact du boîtier (12a) au moins une rainure (110) est disposée, dans laquelle un agent d'étanchéité est reçu,
et
où les deux éléments de boîtier (3a, 3b) sont disposés l'un par rapport à l'autre et fixés ensemble de telle sorte que la première surface de contact du boîtier (12a) du premier élément de boîtier (3a) est orientée vers la première surface de contact du boîtier (12a) du deuxième élément de boîtier (3b), et que les évidements annulaires (11) des premier et deuxième éléments de boîtier (3a, 3b) forment ensemble un espace intérieur (13) à l'intérieur du boîtier (3) ;
un ressort (1) disposé dans l'espace intérieur (13) comprenant une première plaque-ressort annulaire (1a) et une deuxième plaque-ressort annulaire (1b), les plaques-ressort (1a, 1b) étant disposées dans l'espace intérieur (13) de telle sorte qu'au moins une chambre de pression (2, 4) est formée dans l'espace intérieur (13), laquelle est délimitée au moins partiellement par les plaques-ressort (1a, 1b), la chambre de pression (2, 4) pouvant être mise sous pression ou dépressurisée et pouvant être appliquée avec surpression d'un fluide sous pression pouvant être introduit dans le boîtier (3),
où la première plaque-ressort (1a) est coincée entre la première surface d'appui (101) du premier élément de boîtier (3a) et la deuxième surface d'appui (102) du premier élément de boîtier (3a) ;
où la deuxième plaque-ressort (1b) est coincée entre la première surface d'appui (101) du deuxième élément de boîtier (3b) et la deuxième surface d'appui (102) du deuxième élément de boîtier (3b) ; et
où les plaques-ressort (1a, 1b) sont disposées relativement à la au moins une chambre de pression (2, 4) de telle sorte que, par mise sous pression ou dépressurisation de la chambre de pression (2, 4) ou application de la chambre de pression (2, 4) avec surpression, une flexion d'au moins une des plaques-ressort (1a, 1b) peut être modifiée et que le dispositif (10) passe ainsi d'un état ouvert, dans lequel l'objet (5) est à distance des surfaces de serrage (7), à un état fermé, dans lequel une ou plusieurs des surfaces de serrage (7) transmettent une force de serrage et/ou de freinage à l'objet (5).

12. Le dispositif de serrage et/ou de freinage pneumatique (10) selon la revendication 10 ou 11, où les deux éléments de boîtier (3a, 3b) sont fixés ensemble au moyen d'un ou plusieurs moyens de fixation (17) disposés dans les trous (15).

13. Le dispositif de serrage et/ou de freinage pneumatique (10) selon l'une quelconque des revendications 10 à 12, où la deuxième surface de contact du boîtier (12b) du premier élément de boîtier (3a) est orientée vers la deuxième surface de contact du boîtier (12b) du deuxième élément de boîtier (3b).

14. Le dispositif de serrage et/ou de freinage pneumatique (10) selon l'une quelconque des revendications précédentes 10 à 13, où la au moins une chambre de pression comprend une première chambre de pression (4), qui est disposée à l'extérieur du ressort (1) entre au moins une des plaques-ressort (1a, 1b) et le boîtier (3), de préférence : où la première plaque-ressort (1a) est conçue pour, par la mise sous pression de la première chambre de pression (4) ou par l'application de la première chambre de pression (4) avec surpression, réduire sa flexion afin que, lorsque la première extrémité de la première plaque-ressort (1a) s'appuie sur la première surface d'appui (101) du premier élément de boîtier (3a), la deuxième extrémité de la première plaque-ressort (1a) appuie sur la deuxième surface d'appui (102) du premier élément de boîtier (3a) de telle sorte qu'une transmission d'une force de serrage et/ou de freinage de la surface de serrage (7) de l'élément de serrage (8) du premier élément de boîtier (3a) à l'objet (5) à serrer et/ou à freiner est ainsi provoquée et que le dispositif (10) passe de l'état ouvert à l'état fermé, et/ou où la deuxième plaque-ressort (1b) est conçue pour, par la mise sous pression de la première chambre de pression (4) ou par l'application de la première chambre de pression (2, 4) avec surpression, réduire sa flexion afin que, lorsque la première extrémité de la deuxième plaque-ressort (1b) s'appuie sur la première surface d'appui (101) du deuxième élément de boîtier (3b), la deuxième extrémité de la deuxième plaque-ressort (1b) appuie sur la deuxième surface d'appui (102) du premier élément de boîtier (3a) de telle sorte qu'une transmission d'une force de serrage et/ou de freinage de la surface de serrage (7) de l'élément de serrage (8) du deuxième élément de boîtier (3a) à l'objet (5) à serrer et/ou à freiner est ainsi provoquée et que le dispositif (10) passe de l'état ouvert à l'état fermé, et/ou où le dispositif (10) est conçu de telle sorte que, par la mise sous pression de la première chambre de pression (4) ou par l'application de la première chambre de pression (4) avec surpression, la première surface d'appui (101) et la deuxième surface d'appui (102) d'au moins l'un des deux éléments de boîtier (3a, 3b) s'éloignent l'un de l'autre et/ou la flexion d'au moins une des plaques-ressort (1a, 1b) est réduite, et que le dispositif (10) passe ainsi de l'état ouvert à l'état fermé.

15. Le dispositif de serrage et/ou de freinage pneumatique (10) selon l'une quelconque des revendications 10 à 14, où la au moins une chambre de pression comprend une deuxième chambre de pression (2), la deuxième chambre de pression (2) étant disposée à l'intérieur du ressort (1) entre les deux plaques-ressort (1a, 1b), de préférence où le dispositif (10) est conçu de telle sorte que, par la mise sous pression de la deuxième chambre de pression (2) ou par l'application de la deuxième chambre de pression (2) avec surpression, la première surface d'appui (101) et la deuxième surface d'appui (102) d'au moins l'un des deux éléments de boîtier (3a, 3b) se rapprochent l'un de l'autre et/ou la flexion d'au moins une des plaques-ressort (1a, 1b) est augmentée, et que le dispositif (10) passe ainsi de l'état fermé à l'état ouvert.
